# EUROPEAN PATENT APPLICATION

(11) **EP 4 757 450 A1**
(43) Date of publication of application: **10.06.2026**
(21) Application number: 23946975.2
(22) Date of filing: 28.07.2023
(51) Int. Cl.: H04W 72/02

(54) **DEMODULATION METHOD, AND DEVICE**

(71) Applicant: GUANGDONG OPPO MOBILE TELECOMMUNICATIONS CORP., LTD., Dongguan, Guangdong 523860 (CN)
(72) Inventor: CHEN, Wenhong, Dongguan, Guangdong 523860 (CN)
(74) Representative: Penza, Giancarlo
(86) International application number: PCT/CN2023/110030
(87) International publication number: WO 2025/025019

(57) **Abstract**

The present application relates to a demodulation method, and a device. The demodulation method comprises: a terminal device determining K activated CDM groups, K being a positive integer, the terminal device receiving first DCI signaling from a network device, and determining, according to the first DCI signaling, a DMRS port, in a CDM group, that is used for a PDSCH; and the terminal device demodulating the PDSCH on the basis of the DMRS port, in the CDM group, that is used for the PDSCH. In the embodiments of the present application, a DMRS port, in a CDM group, that is used for a PDSCH is indicated by means of DCI signaling, such that a method for simultaneous transmission of a plurality of nodes can be supported, and thus a throughput of the downlink transmission can be improved.

## Description

### TECHNICAL FIELD

The present disclosure relates to the field of communications, and more particularly, to a demodulation method and device.

### BACKGROUND

In the NR system, the Demodulation Reference Signal (DMRS) is designed such that it can support up to 2 or 3 Code Division Multiplexing (CDM) groups, and it can only support joint transmission of two transmission reception points (TRPs). However, in future systems such as Cell-free systems, the base station will be replaced by a large number of sub-nodes, each of which only supports a small number of ports (e.g., 1, 2 or 4 ports) and transport layers, and multiple nodes can transmit data to a terminal device at the same time. Since each sub-node needs a corresponding CDM group, the number of CDM groups of the existing DMRS is insufficient to support joint transmission of a large number of sub-nodes, and the DMRS port indication in the existing Downlink control information (DCI signaling) cannot support a large number of CDM groups. Since the joint transmission of a large number of sub-nodes cannot be supported, the throughput of downlink transmission is low.

### SUMMARY

Embodiments of the present disclosure provide a demodulation method and a demodulation device that can improve the throughput of downlink transmission.

Embodiments of the present disclosure provide a demodulation method, including:
the terminal device determines K activated CDM groups, K being a positive integer;
the terminal device receives a first DCI signaling from a network device, and determines DMRS ports for PDSCH in the CDM groups according to the first DCI signaling; and
the terminal device demodulates the PDSCH based on the DMRS ports for the PDSCH in the CDM groups.

Embodiments of the present disclosure provide a signal sending method, including:
the network device determines K activated CDM groups, K being a positive integer; and
the network device sends a first DCI signaling for determining DMRS ports for PDSCH in the CDM groups.

Embodiments of the present disclosure provide a terminal device, including:
a first determining unit configured to determine K activated CDM groups, K being a positive integer;
a second determining unit configured to receive a first DCI signaling from a network device, and determine DMRS ports for PDSCH in the CDM groups according to the first DCI signaling; and
a demodulation unit configured to demodulate the PDSCH based on the DMRS ports for the PDSCH in the CDM groups.

Embodiments of the present disclosure provide a network device, including:
a third determining unit configured to determine K activated CDM groups, K being a positive integer;
a sending unit configured to send first DCI signaling for determining DMRS ports for PDSCH in the CDM groups.

Embodiments of the present disclosure provide a communication device including a processor for storing a computer program, a memory for invoking and running the computer program stored in the memory, and controlling the transceiver to cause the communication device to perform the above-described method.

Embodiments of the present disclosure provide a chip for implementing the above-described method.

Specifically, the chip includes a processor for invoking and running a computer program from a memory so that a device on which the chip is mounted performs the above-described method.

Embodiments of the present disclosure provide a computer-readable storage medium having stored thereon a computer program. When the computer program is run by a device, the computer program causes the device to perform the above-described method.

Embodiments of the present disclosure provide a computer program product including computer program instructions that cause a computer to perform the above-described method.

Embodiments of the present disclosure provide a computer program that, when run on a computer, causes the computer to perform the above-described method.

In embodiments of the present disclosure, by activating a plurality of CDM groups for a terminal device, and using a DCI signaling to indicate a DMRS ports for PDSCH in each CDM group, the terminal device can determine the plurality of activated CDM groups, determine the DMRS ports for PDSCH in each CDM group, and demodulate the PDSCH based on the DMRS ports for PDSCH in each CDM group, thereby supporting simultaneous transmission for multiple nodes and improving the throughput of downlink transmission.

### BRIEF DESCRIPTION OF THE DRAWINGS

FIG. 1 is a schematic diagram of an application scenario according to an embodiment of the present disclosure.
FIG. 2A is a schematic diagram of a TYPE 1 single-symbol DMRS.
FIG. 2B is a schematic diagram of a Type 1 two-symbol DMRS.
FIG. 2C is a schematic diagram of a Type 2 single-symbol DMRS.
FIG. 2D is a schematic diagram of a Type 2 double symbol DMRS.
FIG. 3A is a schematic diagram of a PDCCH-based downlink non-coherent transmission system.
FIG. 3B is a schematic diagram of a structure of a cell-free system.
FIG. 4 is a schematic flowchart of a demodulation method 400 according to an embodiment of the present disclosure.
FIG. 5A is a first schematic diagram of a DMRS according to an embodiment of the present disclosure.
FIG. 5B is a second schematic diagram of a DMRS according to an embodiment of the present disclosure.
FIG. 5C is a third schematic diagram of a DMRS according to an embodiment of the present disclosure.
FIG. 5D is a fourth schematic diagram of a DMRS according to an embodiment of the present disclosure.
FIG. 6 is a schematic flowchart of a signal sending method 600 according to an embodiment of the present disclosure.
FIG. 7 is a schematic block diagram of a terminal device 700 according to an embodiment of the present disclosure.
FIG. 8 is a schematic block diagram of a network device 800 according to an embodiment of the present disclosure.
FIG. 9 is a schematic block diagram of a communication device according to an embodiment of the present disclosure.
FIG. 10 is a schematic block diagram of a chip according to an embodiment of the present disclosure.
FIG. 11 is a schematic block diagram of a communication system according to an embodiment of the present disclosure.

### DETAILED DESCRIPTION

Hereafter, the technical solutions in the embodiments of the present disclosure will be described with reference to the drawings in the embodiments of the present disclosure.

The technical solution of the embodiment of the present disclosure can be applied to various communication systems, such as a Global System of Mobile communication (GSM) system, a Code Division Multiple Access (CDMA) system, and a Wideband Code Division Multiple Access (WCDMA) system. System, General Packet Radio Service (GPRS), Long Term Evolution (LTE) system, Advanced long term evolution (LTE-A) system, New Radio (NR) system, evolution of NR system, LTE (LTE-based access to unlicensed spectrum, LTE-U) system on unlicensed spectrum, NR (NR-based access to unlicensed spectrum, NR-U) on unlicensed spectrum System, Non-Terrestrial Networks (NTN) system, Universal Mobile Telecommunication System (UMTS), Wireless Local Area Networks (WLAN), Wireless Fidelity (Wi-Fi), A fifth-generation (5G) communication system or other communication system, etc.

Generally speaking, the conventional communication system supports a limited number of connections and is easy to implement, however, with the development of communication technology, the mobile communication system will support not only conventional communication, but also, for example, device-to-device (D2D) communication, machine-to-machine (M2M) communication, Machine Type Communication (MTC), vehicle-to-vehicle (V2V) communication, or vehicle-to-everything (V2X) communication, and the like, and the embodiment of the present disclosure can also be applied to these communication systems.

In an embodiment, the communication system in the embodiment of the present disclosure can be applied to a Carrier Aggregation (CA) scenario, a Dual Connectivity (DC) scenario, or a Standalone (SA) network layout scenario.

In an embodiment, the communication system in the embodiment of the present disclosure may be applied to an unlicensed spectrum, wherein the unlicensed spectrum may also be regarded as a shared spectrum. Optionally, the communication system in the embodiment of the present disclosure may be applied to a licensed spectrum, and the licensed spectrum may be regarded as a non-shared spectrum.

Embodiments of the present disclosure describe various embodiments in connection with a network device and a terminal device, wherein the terminal device may also be referred to as a User Equipment (UE), an access terminal, a subscriber unit, a subscriber station, a mobile station, a mobile station, a remote station, a remote terminal, a mobile device, a user terminal, a terminal, a wireless communication device, a user agent or a user device, and the like.

The terminal device may be a station (STAION, ST) in a WLAN, may be a cellular telephone, a cordless telephone, a Session Initiation Protocol (SIP) telephone, a Wireless Local Loop (WLL) station, a Personal Digital Assistant (PDA) device, a handheld device with wireless communication functionality, a computing device or other processing device connected to a wireless modem, a vehicle-mounted device, a wearable device, a terminal device in a next generation communication system such as an NR network, or a future evolved Public Land Mobile Network (PLMN) network, or the like.

In an embodiment of the present disclosure, the terminal device may be deployed on land, including indoor or outdoor, handheld, wearable, or vehicle-mounted. It can also be deployed on the water (e.g., ships, etc.). It can also be deployed in the air (e.g. on aircraft, balloons and satellites, etc.).

In an embodiment of the present disclosure, the terminal device may be a Mobile Phone (Mobile Phone), a tablet (Pad), a computer with a wireless transceiver function, a Virtual Reality (VR) terminal device, an Augmented Reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, or the like.

By way of example and not limitation, in embodiments of the present disclosure, the terminal device may also be a wearable device. Wearable devices can also be called wearable smart devices, which are a general term for applying wearable technology to intelligently design daily wear and develop wearable devices, such as glasses, gloves, watches, clothing and shoes. A wearable device is a portable device that is worn directly on the body or integrated into the user's clothes or accessories. Wearable devices are not only hardware devices, but also realize powerful functions through software support, data interaction and cloud interaction. Generalized wearable smart devices include full functions, large size, and can realize complete or partial functions without relying on smart phones, such as smart watches or smart glasses, as well as those that only focus on a certain type of application functions and need to be used in conjunction with other devices such as smart phones, such as various smart bracelets and smart jewelry for physical sign monitoring.

In an embodiment of the present disclosure, the network device may be a device for communicating with a mobile device, an Access Point (AP) in WLAN, a base station (BTS) in GSM or CDMA, a base station (NodeB, NB) in WCDMA, an evolutionary Node B, eNB or eNodeB in LTE, a relay station or Access Point, an in-vehicle device, a wearable device, a network device (gNB) in a Near Radio (NR) network, a network device in a future evolution PLMN network, or a network device in a Non-Terrestrial Network (NTN) network, or the like.

In an embodiment of the present disclosure, the network device may provide a service for a cell, and the terminal device communicates with the network device through a transmission resource (e.g., a frequency domain resource, or a spectrum resource) used by the cell. The cell may be a cell corresponding to the network device (e.g., a base station), and the cell may belong to a macro base station or a base station corresponding to a Small cell. Here, the Small cell may include a Metro cell, a Micro cell, a Pico cell, a Femto cell, and the like. These small cells are characterized by their small coverage areas and low transmission power, making them suitable for providing high-speed data transmission services.

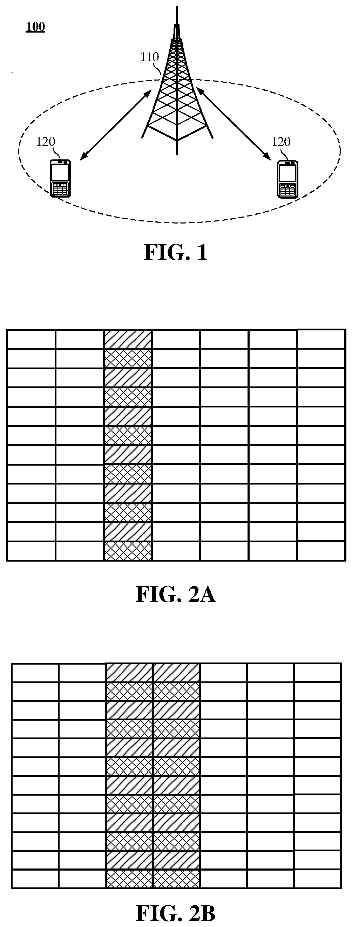

FIG. 1 exemplarily illustrates a communication system 100. The communication system includes a network device 110 and two terminal devices 120. In an embodiment, the communication system 100 may include a plurality of network devices 110, and the coverage range of each network device 110 may include another number of terminal devices 120, which is not limited in the embodiment of the present disclosure.

In an embodiment, the communication system 100 may further include other network entities such as a Mobility Management Entity (MME), an Access and Mobility Management Function (AMF), and the like, but the embodiments of the present disclosure are not limited thereto.

Here, the network device may include an access network device and a core network device. That is, the wireless communication system further includes a plurality of core networks for communicating with access network devices. The access network device may be an evolutionary node B (eNB or e-NodeB) macro base station, a micro base station (also referred to as a "small base station"), a pico base station, an access point (AP), a transmission point (TP) or a new generation base station (gNodeB) in a long-term evolution (LTE) system, a next radio (NR) system, or an authorized auxiliary access long-term evolution (LAA-LTE) system.

It is to be understood that a device having a communication function in the network/system in the embodiments of the present disclosure may be referred to as a communication device. Taking the communication system illustrated in FIG. 1 as an example, the communication device may include a network device and a terminal device having a communication function, and the network device and the terminal device may be specific devices in the embodiment of the present disclosure, and will not be described herein. The communication device may also include other devices in the communication system, such as other network entities such as a network controller and a mobility management entity, but this is not limited in the embodiments of the present disclosure.

It is to be understood that the terms "system" and "network" are often used interchangeably herein. Here, the term "and/or" is only an association relationship describing an association object, and means that there may be three relationships, for example, A and/or B, which may mean that A alone exists, A and B simultaneously exist, and B alone exists. In addition, the character "/" in this article generally indicates that the related objects before and after are in an "or" relationship.

It is to be understood that the "indication" mentioned in the embodiments of the present disclosure may be a direct indication, an indirect indication, or an association relationship. For example, A indicates B, which may mean that A directly indicates B, for example, B can be acquired by A. It may also mean that A indicates B indirectly, for example, A indicates C, and B can be acquired through C. It may also indicate that there is an association relationship between A and B.

In the description of the embodiments of the present disclosure, the term "correspondence" may indicate that there is a direct correspondence or indirect correspondence relationship between the two, may indicate that there is a correlation relationship between the two, or may indicate a relationship between indicating and being instructed, configuring and being configured, or the like.

In order to facilitate understanding of the technical solutions of the embodiments of the present disclosure, the related technologies of the embodiments of the present disclosure will be described below, and the related technologies below can be arbitrarily combined with the technical solutions of the embodiments of the present disclosure as options, and all of them belong to the scope of protection of the embodiments of the present disclosure.

### 1. NR DMRS Introduction:

In a New Radio (NR) system, a Demodulation Reference Signal (DMRS) can be divided into a pre-DMRS, where the pre-DMRS is usually located in the first few Orthogonal Frequency Division Multiplexing (OFDM) symbols of a time slot, and a post-DMRS, which is a repetition of the pre-DMRS, and is used to ensure performance in high-speed scenarios. The preamble DMRS may include 1 or 2 OFDM symbols and is configured by the network device. The position of the rear DMRS is fixed with respect to the position of the front DMRS.

The NR supports two types of DMRS, Type 1 and Type 2, and different types of DMRS have different resource occupancy methods.

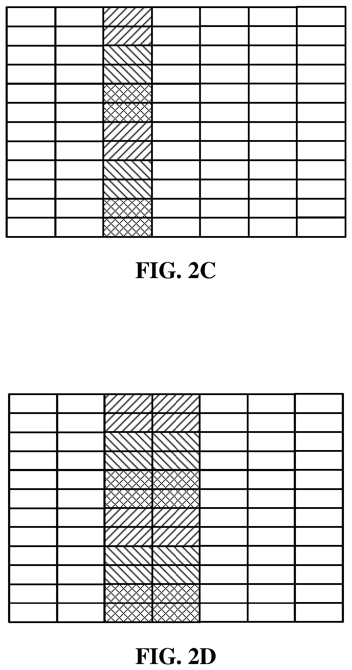

FIGS. 2A and 2B are schematic diagrams of TYPE 1 single-symbol DMRS and dual-symbol DMRS diagrams, respectively, in which two Code Division Multiplexing (CDM) groups (different patterns represent different CDM groups) can be supported on one OFDM symbol of each Physical Resource Block (PRB), and each CDM group contains 6 subcarriers. Each CDM group can support 2 ports, and the two ports are maintained orthogonal through an Orthogonal Cover Code (OCC), that is, the OCC code used by one port on different subcarriers is [+1 +1 +1 +1 +1 +1], and the OCC code used by the other port on different subcarriers is [+1-1 +1-1+1-1]. In this way, Type 1 DMRS can support up to 4 orthogonal ports on one OFDM symbol and up to 8 orthogonal ports on two OFDM symbols (Time Domain Orthogonal Cover Code (TD-OCC)) between two OFDM symbols. Specifically, the first CDM group of the first DMRS symbol includes ports {1000, 1001}, the second CDM group contains ports {1002, 1003}. The first CDM group of the second DMRS symbol includes ports {1004, 1005}, and the second CDM group includes ports {1006, 1007}. In FIG. 2A, two CDM groups are supported on the third OFDM symbol of PRB. In FIG. 2B, 2 CDM groups are supported on the third OFDM symbol and the fourth OFDM symbol of the PRB. The position of the OFDM symbol supporting the CDM group may be fixed.

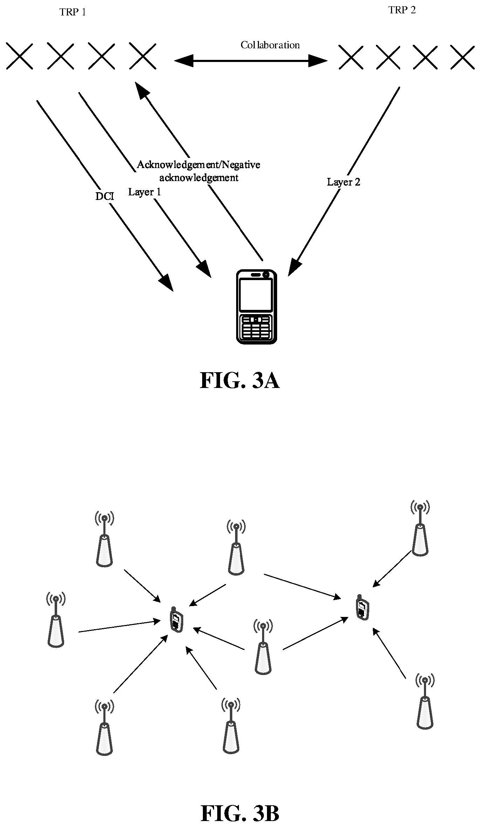

FIGS. 2C and 2D are schematic diagrams of TYPE 2 single-symbol DMRS and dual-symbol DMRS, respectively, three CDM groups (different patterns represent different CDM groups) can be supported on one OFDM symbol of each PRB, and each CDM group contains four subcarriers adjacent in pairs. Each CDM group can support 2 ports, and the two ports are orthogonal through OCC, that is, the OCC code used by one port on different subcarriers is [+1 +1 +1 +1], and the OCC code used by the other port on different subcarriers is [+1-1 +1-1]. In this way, the Type 2 DMRS can support up to 6 orthogonal ports on one OFDM symbol and up to 12 orthogonal ports on two OFDM symbols. Specifically, the first CDM group of the first DMRS symbol includes ports {1000, 1001}, the second CDM group includes ports {1002, 1003}, and the third CDM group includes ports {1004, 1005}. The first CDM group of the second DMRS symbol contains ports {1006, 1007}, the second CDM group contains ports {1008, 1009}, and the third CDM group contains ports {1010, 1011}. In FIG. 2C, 3 CDM groups are supported on the third OFDM symbol of the PRB. In FIG. 2D, 3 CDM groups are supported on the third OFDM symbol and the fourth OFDM symbol of the PRB. The position of the OFDM symbol supporting the CDM group may be fixed.

The DMRS ports in one CDM group are kept orthogonal by code division multiplexing, and orthogonal between different CDM groups is kept by Time Division Multiplexing (TDM) or Frequency Division Multiplexing (FDM).

### 2. Non-Coherent Joint Transmission (NCJT) Based on Multiple Transmission and Reception Point (Multi-TRP):

Downlink non-coherent joint transmission based on Multi-TRP is introduced in the NR system. FIG. 3A is a schematic diagram of a downlink non-coherent transmission system based on a Physical Downlink Control Channel (PDCCH). In the downlink non-coherent transmission, the same Downlink Control Information (DCI signaling) may be used to schedule data transmission of a plurality of different TRPs, and the data of different TRPs adopts different transport layers. Here, the network device may indicate at most two CDM groups, and transport layers from different TRPs employ DMRS ports in different CDM groups for demodulation. Further, the network device may configure at most two TCI states, and transport layers of different TRPs adopt different TCI states. Here, the CDM group is indicated by the DMRS port indication in the DCI signaling, and the network device needs to indicate the DMRS ports and two TCI states from the two CDM groups in one DCI signaling, and each CDM group corresponds to one TCI state, thereby supporting different CDM groups to use different beams for transmission on different TRPs. In this case, Hybrid Automatic Repeat Request-Acknowledgement (HARQ-ACK) feedback can reuse mechanisms in existing protocols. Furthermore, at this time, the terminal reports a Rank Indication (RI) and a Precoding Matrix Indicator (PMI) corresponding to different TRPs in one CSI, and a joint Channel Quality Indicator (CQI) (used to determine a Modulation and Coding Scheme (MCS)).

The TYPE 1 and TYPE 2 DMRS can support up to 2 or 3 CDM groups and can only support joint transmission of two TRPs. However, in systems such as Cell-free systems, the base station will be replaced by a large number of sub-nodes. FIG. 3B is a schematic structural diagram of a cellular removal system. The cell-free system includes multiple sub-nodes, and the base station will be replaced by a large number of sub-nodes. Each sub-node only supports a small number of ports (e.g., 1, 2 or 4 ports) and transport layers, but multiple nodes can transmit data to the terminal equipment at the same time. For example, the network side can simultaneously schedule 6 or more sub-nodes to transmit data to the terminal at the same time, thereby supporting more transport layers through space division multiplexing and improving the throughput of the system. Since each sub-node needs a corresponding CDM group, the number of CDM groups of the existing DMRS is insufficient to support joint transmission of a large number of nodes, and the DMRS port indication and the transmission control information (TCI) state indication in the existing Downlink control information (DCI signaling) cannot support the indication of a large number of CDM groups and TCI status. For example, existing DCI signaling directly uses a table to indicate the used DMRS ports and rate-matched CDM groups, and these DMRS ports can be from up to two CDM groups. However, if the number of CDM groups and DMRS ports that may be used increase greatly, the possibility of combining CDM groups and DMRS ports will be so large that it is difficult to cover with tables, so this method will not be usable.

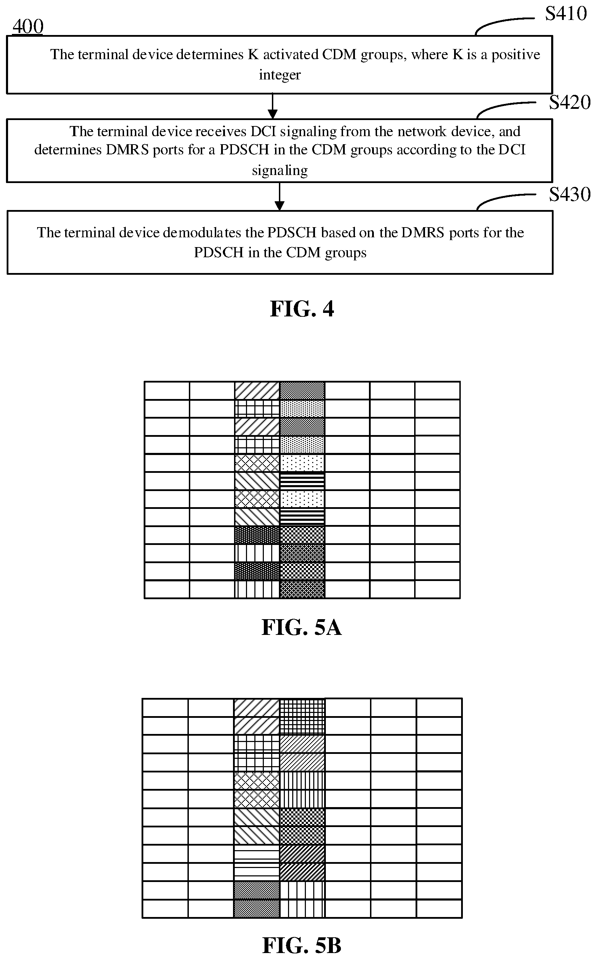

FIG. 4 is a schematic flowchart of a demodulation method 400 according to an embodiment of the present disclosure. The method 400 may be applied to, but is not limited to, the systems shown in FIGS. 1-3. The method includes at least part of the following.
S410: The terminal device determines K activated CDM groups, where K is a positive integer;
S420: The terminal device receives a DCI signaling from the network device, and determines DMRS ports for a Physical Downlink Shared Channel (PDSCH) in the CDM groups based on the DCI signaling;
S430: The terminal device demodulates the PDSCH based on the DMRS ports for the PDSCH in the CDM groups.

In embodiments of the present disclosure, the DMRS ports in a CDM group are maintained orthogonally by CDM (e.g., by orthogonal DMRS sequences or OCC codes), and orthogonality between different CDM groups is maintained by Time Division Multiplexing (TDM) or Frequency Division Multiplexing (FDM) (i.e., by different physical resources). That is, the design method of the CDM group in the embodiments of the present disclosure is not necessarily the same as the DMRS design of the NR system, and only needs to satisfy the foregoing conditions.

Here, K may be an integer greater than 3. For example, according to the indication from the network device, the terminal device determines K (K is greater than 3) activated CDM groups, and each CDM group contains N DMRS ports. N is a positive integer, for example, N is equal to 2, or 4, or other positive integer.

The terminal device can determine the K activated CDM groups in a variety of ways. In some embodiments, the number K of activated CDM groups is less than or equal to the maximum number of transport layers configured by the network device. In some examples, the terminal device determines K activated CDM groups from the L CDM groups agreed with the network device, where L is an integer greater than or equal to 3. For example, the terminal device agrees L CDM groups with the network device in advance, including CDM group 1, CDM group 2, ..., and CDM group L. The terminal device may determine, from the L CDM groups, that K CDM groups are activated CDM groups. If K = L, then all pre-agreed CDM groups are activated CDM groups.

A method of determining K activated CDM groups, including at least the following ways.

### Mode 1:

The terminal device may receive higher layer signaling from the network device, and determine an activated CDM group according to the higher layer signaling.

For example, higher layer signaling may indicate a bitmap in which each bit corresponds to a CDM group, which bit indicates whether the corresponding CDM group is an activated CDM group. Here, a CDM group corresponding to a bit having a value of 1 is an activated CDM group, and a CDM group corresponding to a bit having a value of 0 is an inactivated CDM group. Optionally, a CDM group corresponding to a bit having a value of 0 is an activated CDM group, and a CDM group corresponding to a bit having a value of 1 is an inactivated CDM group. The terminal device receives the bitmap indicated by the higher layer signaling, and determines whether the corresponding CDM group is an activated CDM group according to each bit in the bitmap.

As another example, higher layer signaling may indicate the number K of activated CDM groups. The terminal device receives K indicated by higher layer signaling and determines K activated CDM groups. For example, the terminal device may determine that the 1st to K-th CDM groups among the L CDM groups are activated CDM groups. Optionally, the terminal device may determine that the last K CDM groups among the L CDM groups are activated CDM groups. Optionally, the terminal device may adopt other rules and determine K CDM groups from the L CDM groups as activated CDM groups. The present disclosure is not limited to specific rules. That is, the value of the higher layer signaling configuration K is taken, and the terminal device determines the activated CDM group from the L CDM groups agreed in advance.

As another example, higher layer signaling may indicate the number of DMRS symbols. The terminal device receives the number of DMRS symbols indicated by the higher layer signaling, and determines that the CDM groups on the DMRS symbols corresponding to the number of DMRS symbols are activated CDM groups. That is, the higher layer signaling configures the number S of DMRS symbols, and the terminal device may determine that the CDM group on the S DMRS symbols is an activated CDM group according to a pre-agreement between the terminal device and the network device. The positions of the S DMRS symbols are agreed in advance between the terminal device and the network device.

As another example, the terminal device may receive Radio Resource Control (RRC) signaling and Media Access Control (MAC) Control Element (CE) from the network device, wherein the RRC signaling is used to indicate the number S of DMRS symbols, and the MAC CE is used to indicate the CDM group activated on S DMRS symbols. The terminal device can determine the number S of DMRS symbols according to the RRC signaling, and can determine that the CDM groups on the S DMRS symbols are the activated CDM groups according to the pre-agreement between the terminal device and the network device. Further, the terminal device may determine the CDM group activated on the S DMRS symbols according to the MAC CE. The positions of the S DMRS symbols are agreed in advance between the terminal device and the network device. That is, the RRC signaling configures the number S of DMRS symbols, and the MAC CE indicates the activated CDM group among the CDM groups on the S DMRS symbols, and the activation of the CDM group is completed by combining these two signals.

### Mode 2:

The terminal device receives a DCI signaling from the network device, and determines an activated CDM group based on the DCI signaling.

For example, the DCI signaling may indicate a bitmap in which each bit corresponds to a CDM group, and the bit indicates whether the corresponding CDM group is an activated CDM group. Here, a CDM group corresponding to a bit having a value of 1 is an activated CDM group, and a CDM group corresponding to a bit having a value of 0 is an inactivated CDM group. Optionally, a CDM group corresponding to a bit having a value of 0 is an activated CDM group, and a CDM group corresponding to a bit having a value of 1 is an inactivated CDM group. The terminal device receives the bitmap indicated by the DCI signaling, and determines whether the corresponding CDM group is an activated CDM group according to each bit in the bitmap.

As another example, the DCI signaling may indicate the number K of activated CDM groups. The terminal device receives the number of DMRS symbols indicated by the DCI signaling, and determines that the CDM groups on the DMRS symbols corresponding to the number of DMRS symbols are activated CDM groups. For example, the terminal device may determine that the 1st to K-th CDM groups among the L CDM groups are activated CDM groups. Optionally, the terminal device may determine that the last K CDM groups among the L CDM groups are activated CDM groups. Optionally, the terminal device may adopt other rules and determine K CDM groups from the L CDM groups as activated CDM groups. The present disclosure is not limited to specific rules. That is, the value of the higher layer signaling configuration K is taken, and the terminal device determines the activated CDM group from the L CDM groups agreed in advance.

As another example, the DCI signaling may indicate the number of DMRS symbols. The terminal device receives the number of DMRS symbols indicated by the DCI signaling, and determines that the CDM groups on the DMRS symbols corresponding to the number of DMRS symbols are activated CDM groups. That is, the higher layer signaling configures the number S of DMRS symbols, and the terminal device may determine that the CDM groups on the S DMRS symbols are all activated CDM groups according to a pre-agreement between the terminal device and the network device. The positions of the S DMRS symbols are agreed in advance between the terminal device and the network device.

As another example, the number of DMRS symbols is indicated by RRC signaling, and the CDM group activated on the DMRS symbol corresponding to the number of DMRS symbols is indicated by DCI signaling. The terminal device receives RRC signaling and DCI signaling from the network device, the terminal device can determine the number S of DMRS symbols according to the RRC signaling, and can determine that the CDM group on the S DMRS symbols is an activated CDM group according to a pre-agreement between the terminal device and the network device. Further, the terminal device may determine the CDM group activated on the S DMRS symbols according to the DCI signaling. The positions of the S DMRS symbols are agreed in advance between the terminal device and the network device. That is, the RRC signaling configures the number S of DMRS symbols, and the DCI signaling indicates the CDM group activated among the CDM groups on the S DMRS symbols, and the activation of the CDM group is completed by the combination of these two signals.

### Mode 3:

The terminal device determines the number of activated CDM groups according to the maximum number of transport layers configured by the network device, and determines the activated CDM groups according to the number.

### Mode 4:

The terminal device determines the number of activated CDM groups according to the number of TCI states indicated in the DCI signaling, and determines the activated CDM groups according to the number of activated CDM groups.

The terminal device determines the plurality of activated CDM groups by any of the above-described methods, and can determine the DMRS port corresponding to each CDM group among the plurality of activated CDM groups based on the received DCI signaling, and each CDM group can be transmitted by one transmission node, so that the simultaneous transmission mode of multiple nodes can be supported, and the throughput of downlink transmission can be improved.

In some embodiments, the DCI signaling may indicate the number of PDSCH transport layers corresponding to each of different CDM groups among the K CDM groups. Based on the DCI signaling, the terminal device may determine the number of PDSCH transport layers corresponding to each of different CDM groups among the K CDM groups. According to the number of PDSCH transport layers corresponding to different CDM groups in the K CDM groups, the DMRS port used for PDSCH in each CDM group in the K CDM groups is determined. There are at least three ways in which the DCI signaling indicates the number of PDSCH transport layers corresponding to different CDM groups among K CDM groups.

### Mode 1:

The DCI signaling may include a first information field indicating the number of PDSCH transport layers corresponding to each of the K CDM groups.

Accordingly, the terminal device may determine the number of PDSCH transport layers corresponding to each of the K CDM groups according to the first information field.

For example, a correspondence relationship between different values of an index and different combinations of PDSCH transport layers that specify the number of PDSCH transport layers corresponding to each CDM group may be specified in advance. The first information field may indicate a value of the index. The terminal device determines the number of PDSCH transport layers corresponding to each CDM group among the K CDM groups according to the value of the index and the predetermined correspondence relationship.

The value range of the number of PDSCH transport layers corresponding to each CDM group may be {1, 2}, or {0, 1, 2}, or {1, 2, 3, 4}, or {0, 1, 2, 3, 4}, or {0, 1, 2, NULL}, or {0, 1, 2, 3, NULL}. The number of PDSCH transport layers corresponding to each CDM group may be any numerical value in the value range.

Here, 0 may indicate that the CDM group is not used to transmit DMRS, but the terminal device needs to perform rate matching on the resources occupied by the CDM group;
NULL may indicate that the CDM group is not used to transmit the DMRS, and the terminal device does not need to perform rate matching on the resources occupied by the CDM group.

1, 2, 3, and 4 may indicate that the number of PDSCH transport layers corresponding to the CDM group is 1 layer, 2 layers, 3 layers, and 4 layers, respectively.

Here, 0 and NULL may also use other description methods to indicate the same meaning, for example, the physical meanings expressed by the two may be interchanged, that is, NULL may indicate that the CDM group is not used to send DMRS, but the terminal device needs to perform rate matching on the resources occupied by the CDM group; 0 may indicate that the CDM group is not used to transmit DMRS, and the terminal device does not need to perform rate matching on the resources occupied by the CDM group.

The above-described representation is merely an example, and the embodiment of the present disclosure may also use other methods to express the value range of the number of PDSCH transport layers corresponding to the CDM group, and will not be exhaustive here.

### Mode 2:

The DCI signaling includes a second information field and a third information field, wherein the second information field indicates a value of K (K is the number of activated CDM groups), and the third information field indicates a combination of K transport layer numbers corresponding to the value of K; Each number of transport layers in the combination is a number of transport layers corresponding to one CDM group among the K CDM groups.

Optionally, the second information domain may be indicated by higher layer signaling (e.g., MAC CE) and the third information domain by DCI signaling.

Accordingly, the terminal device may determine the number of PDSCH transport layers corresponding to each of the K CDM groups according to the combination of the value of K indicated by the second information field and the number of K transport layers corresponding to the value of K indicated by the third information field.

For example, for different values of K, a correspondence relationship between different values of an index and different combinations of PDSCH transport layers that specify the number of PDSCH transport layers corresponding to each CDM group may be specified in advance. The third information field may indicate the value of the index. The terminal device firstly determines the corresponding relationship according to the value of K indicated by the second information field. According to the corresponding relationship and the value of the index indicated by the third information field, the number of PDSCH transport layers corresponding to each CDM group of the K CDM groups is determined.

### Mode 3:

The DCI signaling indicates the total number of transport layers and the distribution manner of transport layers in the K activated CDM groups.

Accordingly, the terminal device may determine the number of PDSCH transport layers corresponding to each of the K CDM groups according to the total number of transport layers and the distribution manner of the transport layers in the K CDM groups.

For example, a correspondence relationship between different values of an index and different transport layer distribution manners that specify the number of PDSCH transport layers corresponding to each CDM group may be specified. The DCI signaling may indicate the value of the index. The terminal device determines the number of PDSCH transport layers corresponding to each CDM group among the K CDM groups according to the corresponding relationship and the value of the index indicated by the DCI signaling.

For example, the number K of activated CDM groups is 4, the DCI signaling indicates that the total number of transport layers is 5, and the distribution manner of the 5 transport layers in the 4 activated CDM groups is {2, 1, 1, 1}, that is, the number of transport layers corresponding to the first activated CDM group is 2, and the number of transport layers corresponding to the remaining activated CDM groups is 1.

In an example, the terminal device may determine only the number of transport layers corresponding to each of k CDM groups actually used for PDSCH DMRS transmission among K activated CDM groups (k is less than or equal to K). The number of transport layers corresponding to the other CDM groups among the K activated CDM groups is 0 by default, that is, they are not used for PDSCH DMRS transmission. For example, the distribution manner of transport layers in K CDM groups includes: a combination of k numbers of transport layers. Here, k is a positive integer less than or equal to K.

The k numbers of transport layers correspond to the first k CDM groups among the K CDM groups, respectively.

Optionally, the k numbers of transport layers correspond to the k CDM groups indicated by the network device among the K CDM groups, respectively.

Further, among the k transport layers, a difference between the maximum value of the number of transport layers corresponding to the CDM group and the minimum value of the number of transport layers is less than or equal to 1. Optionally, the difference between the maximum value of the number of transport layers and the minimum value of the number of transport layers among the k numbers of transport layers is 2 or less.

It can be seen that when the transport layer is allocated among k CDM groups, the maximum difference among the numbers of transport layers corresponding to different CDM groups does not exceed 1 or does not exceed 2, thereby ensuring a relatively balanced distribution of the number of transport layers among different CDM groups. When it is applied to multi-point transmission scenarios, it can ensure that the difference in the number of transport layers between multiple nodes is small, and then ensure that the difference in channel gain between multiple nodes is small, which is suitable for multi-point transmission.

After determining the number of PDSCH transport layers corresponding to each of the different CDM groups among the K CDM groups in any of the above methods, the terminal device may determine the DMRS port used for PDSCH in each of the K CDM groups according to the number of PDSCH transport layers corresponding to each of the different CDM groups among the K CDM groups. For example, when the number of PDSCH transport layers corresponding to the CDM group is n, n is a positive integer. The terminal device determines that the n PDSCH transport layers of the CDM adopt the first n DMRS ports in the CDM group. Optionally, the terminal device determines n DMRS ports for n PDSCH transport layers in the CDM group according to higher layer signaling or physical layer signaling instructions.

In other embodiments, the DCI signaling may indicate a DMRS port for PDSCH within each of the K CDM groups, respectively. Based on the DCI signaling, the terminal device may directly determine a DMRS port for PDSCH in each of the K CDM groups.

For example, the DCI signaling indicates a DMRS port for PDSCH within each of the K CDM groups, respectively. Accordingly, according to the DCI signaling, the terminal device may determine a DMRS port for the PDSCH in each of the K CDM groups.

The value range of the DMRS ports for the PDSCH in each CDM group may be {0, 1, 0-1}, or {0, 1, 0-1, Null}, or {0, 1, 2, 3, 0-1, 2-3, 0-2, 0-3}, or {0, 1, 2, 3, 0-1, 2-3, 0-2, 0-3, Null}.Here, NULL may indicate that the CDM group is not used to send the DMRS of the terminal device, that is, there is no DMRS port used for the PDSCH in the CDM group. 0 indicates that the DMRS port for PDSCH in the CDM group is port 0, "0-1" indicates that the DMRS ports for PDSCH in the CDM group are port 0 and port 1, "0-2" indicates that the DMRS ports for PDSCH in the CDM group are port 0, port 1, port 2, "0-3" indicates that the DMRS ports for PDSCH in the CDM group are port 0, port 1, port 2 and port 3, and "2-3" indicates that the DMRS ports for PDSCH in the CDM group are port 2 and port 3.

Based on the above-described various methods, the terminal device can determine a plurality of activated CDM groups based on DCI signaling, and determine a DMRS port for PDSCH transmission in each activated CDM group, and each CDM group can be transmitted by one transmission node, so that the simultaneous transmission mode of multiple nodes can be supported and the throughput of downlink transmission can be improved.

In some embodiments, the terminal device may further determine TCI states corresponding to the K CDM groups according to the DCI signaling. The network device sends DCI signaling to the terminal device, and the DCI signaling indicates a TCI state corresponding to the CDM group. According to the DCI signaling state, the terminal device may determine a TCI state corresponding to a plurality of CDM groups.

For example, M TCI states are indicated in the DCI signaling, the M TCI states correspond to M CDM groups for PDSCH transmission among the K CDM groups, and M is a positive integer.

Optionally, N TCI states are indicated in the DCI signaling, and the terminal device determines a TCI state corresponding to each CDM group for PDSCH transmission among the K CDM groups from among the N TCI states according to a correspondence relationship between the TCI state indicated by the network device through higher layer signaling in advance and the CDM group; N is a positive integer.

Optionally, the first TCI state, the second TCI state, and a bitmap are indicated in the DCI signaling, the bitmap indicates that the K TCI states adopt the first TCI state or the second TCI state.

In an example, CDM groups corresponding to the same TCI state are associated with the same Phase-tracking reference signal (PTRS) port.

According to the indication of the DCI signaling, the terminal device may determine the TCI state corresponding to each CDM group among the K activated CDM groups to ensure reception of each PDSCH.

Hereafter, with reference to specific embodiments, a method in which the terminal device determines activated CDM groups, the terminal device determines the number of PDSCH transport layers corresponding to each of different CDM groups among K CDM groups, the terminal device determines a DMRS ports for PDSCH in each CDM group, and the terminal device determines a TCI state corresponding to each CDM group will be described.

### First embodiment

In this embodiment, the terminal device determines K activated CDM groups, each CDM group containing N DMRS ports. Specifically, the terminal device determines K activated CDM groups from the L CDM groups agreed with the network device, where L is an integer greater than or equal to 3.

In an implementation, in order to support multiple nodes of 2port, 6 CDM groups may be supported on one OFDM symbol, each CDM group containing 2 DMRS ports, thereby supporting 12 ports on one OFDM symbol. Assuming there are S DMRS symbols, there are 12 * S DMRS ports in total (i.e. L = 6 * S CDM groups). An example is shown in FIGS. 5A and 5B, in which resources of the same CDM group are in the same pattern, and resources of different CDM groups are in different patterns.

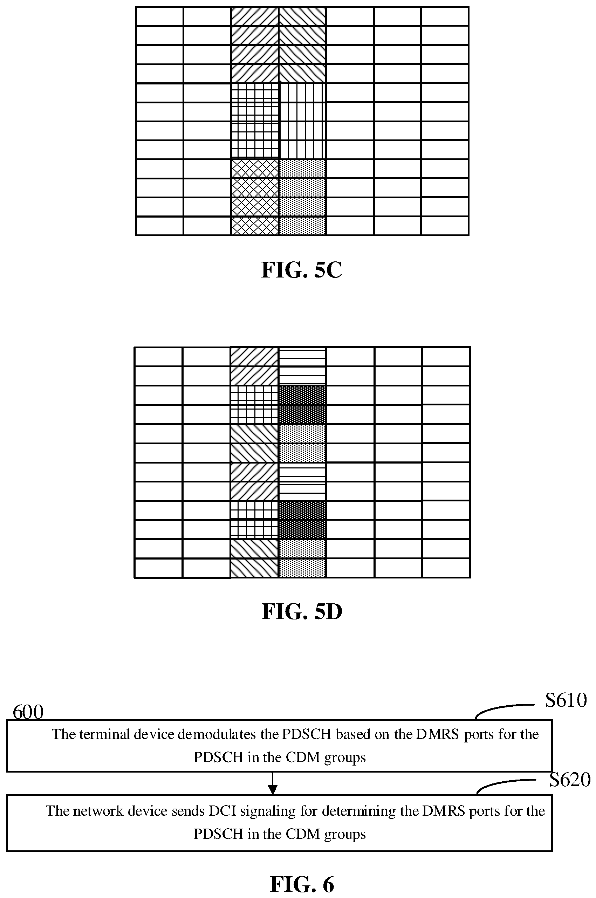

In another implementation, in order to support multiple nodes of 4port, three CDM groups may be supported on one OFDM symbol, each CDM group containing 4 DMRS ports, thereby supporting 12 ports on one OFDM symbol. Assuming that there are S DMRS symbols and the CDM groups on different symbols are TDM, there are 12 * S DMRS ports in total (i.e. L = 3 * S CDM groups). An example is shown in FIGS. 5C and 5D, where the resources of the same CDM group are in the same pattern, and the resources of different CDM groups are in different patterns.

In another implementation, K = L, i.e., all CDM groups are activated CDM groups.

Here, the number K of activated CDM groups is less than or equal to the maximum number of transport layers configured by the network device.

The value of K may be greater than 3, i.e. more CDM groups may be supported than existing systems.

### Second embodiment

In this embodiment, the terminal device determines K activated CDM groups, each CDM group containing N DMRS ports. The terminal device may determine the activated K CDM groups from the L CDM groups agreed with the network device, where L is an integer greater than or equal to 3. Specifically, the terminal device receives higher layer signaling from the network device, and determines an activated CDM group according to the higher layer signaling. For example, the K activated CDM groups may be determined in one of the following ways.

Mode 1: The terminal device receives a bitmap indicated by higher layer signaling, each bit in the bitmap corresponds to a CDM group, and the CDM group corresponding to a bit having a value of 1 is an activated CDM group. For example, assuming L = 12, the bitmap is of length 12, and 100001000000 indicates that the 1st and 6th CDM groups are activated.

Mode 2: The terminal device receives the number K of activated CDM groups indicated by higher layer signaling, and determines that the 1st to K-th CDM groups are activated CDM groups. That is, the higher layer signaling sets the value of K, and then determines that the first K CDM groups among the L CDM groups are the activated CDM groups.

Mode 3: The terminal device receives the number S of DMRS symbols indicated by higher layer signaling, and determines that the CDM group on the S DMRS symbols is an activated CDM group. That is, if the number S of DMRS symbols is configured in higher layer signaling, the CDM groups on the S DMRS symbols are all activated CDM groups. The positions of the S DMRS symbols are agreed in advance between the terminal device and the network device.

Mode 4: The terminal device receives Radio Resource Control (RRC) signaling and a Media Access Control Control Element (MAC CE) transmitted by the network device, wherein the RRC signaling is used to indicate the number S of DMRS symbols, and the MAC CE is used to indicate the CDM group activated on S DMRS symbols. That is, the RRC signaling configures the number S of DMRS symbols, and the MAC CE indicates the activated CDM group from among the S CDM groups on OFDM, and completes the activation of the CDM group by combining the two signaling.

Here, the number K of activated CDM groups is less than or equal to the maximum number of transport layers configured by the network device.

The value of K may be greater than 3. That is, more CDM groups may be supported than existing systems.

### Third embodiment

In the present embodiment, the terminal device determines K activated CDM groups, each CDM group containing N DMRS ports. Specifically, the terminal device may determine K activated CDM groups from the L CDM groups agreed with the network device, where L is an integer greater than or equal to 3. Specifically, the terminal device receives DCI signaling from the network device, and determines an activated CDM group based on the DCI signaling. Specifically, it may include one of the following methods:
Mode 1: DCI signaling indicates a bitmap, and each bit in the bitmap corresponds to a CDM group, wherein the CDM group corresponding to the bit having a value of 1 is an activated CDM group. For example, assuming that the bitmap is length 6, 101001 indicates activation of the 1st, 3rd, and 6th CDM groups.
Mode 2: DCI signaling indicates the number K of activated CDM groups, and the first to K CDM groups of the agreed L CDM groups are activated CDM groups. That is, the DCI signaling configures the value of K, and then determines that the first K CDM groups of the L CDM groups are activated CDM groups.
Mode 3: The DCI signaling indicates the number S of DMRS symbols, and the CDM group on the corresponding S DMRS symbols is the activated CDM group. That is, if the number S of DMRS symbols is configured in the DCI signaling, the CDM groups on the S DMRS symbols are all activated CDM groups.
Mode 4: It is determined that the number of activated CDM groups is equal to the number of TCI states indicated in the DCI signaling. That is, the network device does not need to specifically indicate the number of activated CDM groups, and the terminal device may determine the number of indicated TCI states as the number of activated CDM groups according to the TCI state indication information in the DCI signaling. After determining the number K of activated CDM groups, the terminal device may determine that the first K CDM groups among the L CDM groups are activated CDM groups.

Here, the number K of activated CDM groups is less than or equal to the maximum number of transport layers configured by the network device.

The value of K may be greater than 3, i.e. more CDM groups may be supported than existing systems.

### Fourth embodiment

In this embodiment, the terminal device determines K activated CDM groups, each CDM group containing N DMRS ports. Specifically, the terminal device may determine K activated CDM groups from the L CDM groups agreed with the network device, where L is an integer greater than or equal to 3. Specifically, the terminal device may determine that the number of activated CDM groups is equal to the maximum number of transport layers configured by the network device. Among them, the maximum number of transport layers configured by the network device may be indicated by RRC signaling. For example, after determining the number K of activated CDM groups, the terminal device may determine that the first K CDM groups among the L CDM groups are activated CDM groups.

Here, the number K of activated CDM groups is less than or equal to the maximum number of transport layers configured by the network device.

The value of K may be greater than 3, i.e. more CDM groups may be supported than existing systems.

### Fifth embodiment

In the present embodiment, the terminal device determines the number of PDSCH transport layers corresponding to each of different CDM groups among the K CDM groups, and/or the DMRS ports for PDSCH in each CDM group.

Specifically, the terminal device receives the DCI signaling transmitted by the network device, and determines the number of Physical Downlink Shared Channel (PDSCH) transport layers corresponding to each CDM group among the activated CDM groups, or the DMRS ports for the PDSCH in each CDM group, according to the DCI signaling.

Accordingly, the network device sends a DCI signaling for determining the number of PDSCH transport layers corresponding to each of the K activated CDM groups, or the DMRS ports for PDSCH within each CDM group.

In some embodiments, the terminal device may determine only the number of transport layers corresponding to each of the k CDM groups actually used for PDSCH DMRS transmission in the activated CDM group, or the DMRS ports used for PDSCH in the k CDM groups. The number of transport layers corresponding to the other CDM groups is 0 by default (if k < K), that is, the DMRS port of the other CDM group is not used for the PDSCH of the terminal. That is, the number of transport layers of some CDM groups among the K CDM groups may be 0, that is, the number of transport layers of some CDM groups may not be used for PDSCH transmission, and the DMRS ports thereof may not be used for PDSCH of the terminal.

In an embodiment, the terminal device still needs to rate match the physical resources occupied by the K-k CDM groups that are not used for DMRS transmission, since these CDM groups may be used for DMRS transmission of other multiplexed users.

In an embodiment, the DCI signaling includes a first information field indicating the number of PDSCH transport layers corresponding to each of the K activated CDM groups, respectively. The following are two specific examples of a CDM group containing different numbers of DMRS ports:

### (1) First example

If one CDM group includes two DMRS ports, the value range of the number of PDSCH transport layers corresponding to each CDM group may be {1, 2}, {0, 1, 2} or {0, 1, 2, NULL}. The number of PDSCH transport layers corresponding to each CDM group may be any numerical value in the value range.
0 indicates that the CDM group is not used for the DMRS of the transmitting terminal, that is, the number of PDSCH transport layers corresponding to the CDM group is 0. However, the terminal equipment needs to perform rate matching on the resources occupied by the CDM group.
1 indicates that the CDM group is used for transmitting one transport layer, that is, the number of PDSCH transport layers corresponding to the CDM group is 1.
2 indicates that the CDM group is used for transmitting two transport layers, that is, the number of PDSCH transport layers corresponding to the CDM group is two.

Null indicates that the CDM group is not used to transmit the DMRS of the terminal, that is, the number of PDSCH transport layers corresponding to the CDM group is 0, and the terminal device does not need to perform rate matching on the resources occupied by the CDM group. Optionally, the foregoing case may be represented by other symbols, for example, 3 is used to indicate that the CDM group is not used to transmit the DMRS of the terminal, and the terminal device does not need to perform rate matching on the resource occupied by the CDM group.

The above-described representation is merely an example, and the present disclosure does not limit the specific representation of different values of the number of PDSCH transport layers corresponding to the CDM group. Here, 0 and Null can also be described in other ways, for example, the physical meanings expressed by 0 and Null can be interchanged, that is, Null indicates that the CDM group is not used to transmit the DMRS of the terminal, but the terminal device needs to perform rate matching on the resources occupied by the CDM group; 0 indicates that the CDM group is not used to transmit the DMRS of the terminal, and the terminal device does not need to perform rate matching on the resource occupied by the CDM group.

For different value ranges of the number of PDSCH transport layers corresponding to the CDM group, signaling with different lengths may be used to indicate the number of transport layers.

For example, if the value range of the number of transport layers is {1, 2}, each CDM group may indicate the number of transport layers by 1 bit of signaling, and a total of K bits of signaling is required to indicate the number of PDSCH transport layers corresponding to each CDM group among K CDM groups. If the value range of the number of transport layers is {0, 1, 2}, each CDM group needs to indicate the number of transport layers by 2 bits of signaling, and a total of 2K bits of signaling is required to indicate the number of PDSCH transport layers corresponding to each CDM group among K CDM groups. If the value range of the number of transport layers is {0, 1, 2, NULL}, each CDM group needs to indicate the number of transport layers through 2 bits of signaling, and a total of 2K bits of signaling is required to indicate the number of PDSCH transport layers corresponding to each CDM group among the K CDM groups.

### (2) Second example

If a CDM group includes four DMRS ports, the value range of the number of transport layers corresponding to each CDM group may be {1, 2, 3, 4}, {0, 1, 2, 3, 4} or {0, 1, 2, 3, NULL}. The number of PDSCH transport layers corresponding to each CDM group may be any numerical value in the value range.

Here, 0 indicates that the CDM group is not used for the DMRS of the transmitting terminal, that is, the number of PDSCH transport layers corresponding to the CDM group is 0, but the terminal equipment needs to perform rate matching on the resources occupied by the CDM group;
1 indicates that the CDM group is used for transmitting one transport layer, that is, the number of PDSCH transport layers corresponding to the CDM group is 1.
2 indicates that the CDM group is used for transmitting two transport layers, that is, the number of PDSCH transport layers corresponding to the CDM group is 2.
3 indicates that the CDM group is used for transmitting three transport layers, that is, the number of PDSCH transport layers corresponding to the CDM group is 3.
4 indicates that the CDM group is used for transmitting 4 transport layers, that is, the number of PDSCH transport layers corresponding to the CDM group is 4.

Null indicates that the CDM group is not used to transmit the DMRS of the terminal, that is, the number of PDSCH transport layers corresponding to the CDM group is 0, and the terminal device does not need to perform rate matching on the resources occupied by the CDM group. Optionally, the foregoing case may be represented by other symbols, for example, 5 is used to indicate that the CDM group is not used to transmit the DMRS of the terminal, and the terminal device does not need to perform rate matching on the resource occupied by the CDM group.

The above-described representation is merely an example, and the present disclosure does not limit the specific representation of different values of the number of PDSCH transport layers corresponding to the CDM group. Here, 0 and Null can also be described in other ways, for example, the physical meanings expressed by 0 and Null can be interchanged, that is, Null indicates that the CDM group is not used to transmit the DMRS of the terminal, but the terminal device needs to perform rate matching on the resources occupied by the CDM group; 0 indicates that the CDM group is not used to transmit the DMRS of the terminal, and the terminal device does not need to perform rate matching on the resources occupied by the CDM group.

For different value ranges of the number of PDSCH transport layers corresponding to the CDM group, signaling of different lengths may be used to indicate the number of transport layers.

For example, if the value range of the number of transport layers is {1, 2, 3, 4}, each CDM group may indicate the number of transport layers by 2 bits of signaling, and a total of 2K bits of signaling is required to indicate the number of PDSCH transport layers corresponding to each CDM group among K CDM groups. If the value range of the number of transport layers is {0, 1, 2, 3, 4}, each CDM group may indicate the number of transport layers through 3 bits of signaling, and a total of 3K bits of signaling is required to indicate the number of PDSCH transport layers corresponding to each CDM group among K CDM groups. If the value range of the number of transport layers is {0, 1, 2, 3, NULL}, each CDM group may indicate the number of transport layers by 3 bits of signaling, and a total of 3 K bits of signaling is required to indicate the number of PDSCH transport layers corresponding to each CDM group among K CDM groups.

In an embodiment, if the number of transport layers is n, the first n DMRS ports of the respective CDM group may be used for DMRS transmission of the terminal. In another embodiment, the network device may additionally indicate, through higher layer signaling or physical layer signaling, 1-bit or 2-bit information that is used to indicate which DMRS ports in the CDM group are used to transmit DMRS. For example, in the case where one CDM group contains two ports, one bit may be used to indicate whether the first or second DMRS port is used for transmitting DMRS. In the case where one CDM group contains four DMRS ports, two bits may be used to indicate that one of the four DMRS ports is used for DMRS transmission (corresponding to the number of PDSCH transport layers of 1), or one bit may be used to indicate whether the first two or the last two DMRS ports are used for DMRS transmission (corresponding to the number of PDSCH transport layers of 2).

In an embodiment, the DCI signaling includes an information field indicating a DMRS port for PDSCH within each of the K activated CDM groups. The following are two specific examples of a CDM group containing different numbers of DMRS ports.

### (1) First example

If a CDM group includes two DMRS ports, the value range of the DMRS ports for PDSCH in each CDM group may be {0, 1, 0-1} or {0, 1, 0-1, Null}. The DMRS port used for PDSCH in each CDM group may be any value in the value range.

Here, 0 indicates that the DMRS port for PDSCH in the CDM group is port 0.

1 indicates that the DMRS port for PDSCH in the CDM group is port 1.

0-1 indicates that the DMRS ports for PDSCH in the CDM group are port 0 and port 1.

Null indicates that the CDM group is not used to transmit the DMRS of the terminal.

The above-described representation is merely an example, and the present disclosure does not limit the specific representation of different values of the number of PDSCH transport layers corresponding to the CDM group. Here, 0 and Null may indicate the same meaning in other descriptions, for example, the physical meanings expressed by 0 and Null may be interchanged, that is, Null indicates that the DMRS port used for PDSCH in the CDM group is port 0, and 0 indicates that the CDM group is not used for DMRS of the transmitting terminal.

Different lengths of signaling may be used to indicate the number of transport layers for different value ranges of DMRS ports used for PDSCH in the CDM group.

For example, if the value range of the DMRS port is {0, 1, 0-1}, each CDM group needs to indicate the DMRS port by 2 bits of signaling, and a total of 2K bits needs to indicate the DMRS port used for PDSCH in each CDM group of K CDM groups. If the value range of the DMRS port is {0, 1, 0-1, Null}, each CDM group needs to indicate the DMRS port through 2bits of signaling, and a total of 2K bits needs to indicate the DMRS port used for PDSCH in each CDM group of K CDM groups.

### (2) Second example

If a CDM group contains two DMRS ports, the value range of the DMRS ports for PDSCH in each CDM group may be {0, 1, 2, 3, 0-1, 2-3, 0-2, 0-3} or {0, 1, 2, 3, 0-1, 2-3, 0-2, 0-3, Null}. The DMRS port used for PDSCH in each CDM group may be any value in the value range.

Here, 0 indicates that the DMRS port for PDSCH in the CDM group is port 0.

1 indicates that the DMRS port for PDSCH in the CDM group is port 1.

0-1 indicates that the DMRS ports for PDSCH in the CDM group are port 0 and port 1; and so on.

Null indicates that the CDM group is not used to transmit the DMRS of the terminal.

Here, 0 and Null may also use other descriptions to indicate the same meaning, for example, the physical meanings expressed by the two may be interchanged. For example, Null means that the DMRS port used for PDSCH in the CDM group is port 0, and 0 means that the CDM group is not used for DMRS of the transmitting terminal. The above-described representations are merely examples, and the present disclosure does not limit specific representations of different values of DMRS ports used for PDSCH in the CDM group.

Different lengths of signaling may be used to indicate the number of transport layers for different value ranges of DMRS ports used for PDSCH in the CDM group.

For example, if the value range of the DMRS port is {0, 1, 2, 3, 0-1, 2-3, 0-2, 0-3}, each CDM group needs to indicate the DMRS port by signaling of 3 bits, and a total of 3 K bits need to indicate the DMRS port used for PDSCH in each of the K CDM groups.

In an embodiment of the present disclosure, the number of transport layers of the PDSCH is the sum of the number of DMRS ports included in all CDM groups.

### Sixth example

In the present embodiment, the terminal device determines the number of PDSCH transport layers corresponding to each of different CDM groups among the K CDM groups.

Specifically, the terminal device receives the DCI signaling transmitted by the network device, and determines the number of PDSCH transport layers corresponding to each CDM group among the K CDM groups according to the DCI signaling.

Accordingly, the network device sends a DCI signaling for determining the number of PDSCH transport layers corresponding to each of the K CDM groups.

In the present embodiment, the terminal device may only determine the number of transport layers corresponding to the k CDM groups actually used for PDSCH DMRS transmission among the K CDM groups, and the number of transport layers corresponding to the other CDM groups is 0 by default (if k < K), that is, it is not used for PDSCH DMRS transmission, so no special determining step is required.

In an embodiment, the terminal device still needs to rate match the physical resources occupied by the K-k CDM groups that are not used for DMRS transmission, since these CDM groups may be used for DMRS transmission of other multiplexed users.

In an embodiment, the DCI signaling indicates the number of PDSCH transport layers and how the PDSCH transport layers are allocated among K CDM groups. The terminal device may determine the number of PDSCH transport layers corresponding to each CDM group according to the distribution method.

In an example, the distribution manner of the transport layers among the K CDM groups is a combination of k numbers of transport layers, and the k numbers of transport layers respectively correspond to the first k CDM groups among the K CDM groups, or correspond to k CDM groups indicated by the network device among the K CDM groups, where k is less than or equal to K. At this time, the number of transport layers corresponding to the other K-k CDM groups is 0 (if k < K).

For example, when k = 1, if the combination of k transport layers is {2}, it means that only one CDM group is actually used for DMRS transmission, and the number of transport layers corresponding to the CDM group is 2. If K > 1, the number of transport layers corresponding to other CDM groups is 0.

For another example, when k = 3, if the combination of k transport layers is {1, 1, 2}, it means that three CDM groups are actually used for DMRS transmission, and the corresponding transport layers are 1, 1, and 2, respectively. If K > 3, the number of transport layers corresponding to other CDM groups is 0.

Here, the network device may indicate the k CDM groups by DCI signaling or higher layer signaling, for example, by a bitmap of k bits. The length of the bitmap is K bits, and each bit corresponds to a CDM group among K activated CDM groups. When the bit value is 1, it indicates that the corresponding CDM group is the CDM group actually used for PDSCH DMRS transmission; When the bit value is 0, it indicates that the corresponding CDM group is not used for PDSCH DMRS transmission, and k bits in the bitmap have a value of 1, and the remaining bits have a value of 0.

In an embodiment, the difference between the maximum value and the minimum value in the k numbers of transport layers does not exceed O, O = 1 or 2. That is, among the number of transport layers corresponding to CDM groups actually used for PDSCH DMRS transmission among K CDM groups, the difference between the maximum number of transport layers and the minimum number of transport layers does not exceed O. This limitation can guarantee the performance of multi-node transmission. If the number of transport layers between multiple nodes is too different, it means that the channel gain between multiple nodes is very different, so it is not suitable for multi-point transmission; By limiting the maximum difference of the number of transport layers corresponding to different CDM groups, this embodiment can ensure that the channel gain difference between a plurality of nodes is not large, and is suitable for multi-point transmission.

In an embodiment, if the number of transport layers corresponding to one CDM group is n, the first n DMRS ports of the corresponding CDM group are used for DMRS transmission of the terminal. In another embodiment, the network device may additionally indicate, through higher layer signaling or physical layer signaling, 1-2 bits of information used to indicate which ports in the CDM group are used to transmit the DMRS. For example, in the case where one CDM group contains two ports, one bit may be used to indicate whether the first port or the second port is used for DMRS transmission.

In the following description, it is assumed that the difference between the maximum number of transport layers and the minimum number of transport layers does not exceed 1. Without this limitation, the corresponding table can be directly expanded to support more transport layer combinations.

In some embodiments, the network device indicates, via DCI signaling, an index corresponding to a Rank and a combination of transport layers, Rank being equal to the total number of transport layers. According to this index, the terminal can determine the number of transport layers corresponding to the currently used CDM group.

The case where each CDM group contains 2 DMRS ports is shown in Table 1 or Table 2, where Table 1 does not contain flips between layers and Table 2 contains flips between layers. Here, the number of transport layers in a combination of transport layers in Table 1 can be interchanged without affecting the effect. For example, {1, 2} and {2, 1} are equivalent, and {1, 1, 2, 2}, {1, 2, 1, 2}, {1,2,2,1}, {2, 1, 2, 1}, {2, 1, 1, 2}, {2, 2, 1, 1} are equivalent.

For example, when index = 3 in Table 1, Rank = 3 (indicating that the total number of transport layers is 3), two CDM groups are used, where the number of transport layers corresponding to the first CDM group is 2, and the number of transport layers corresponding to the second CDM group is 1 (indicated by {2, 1} in Table 1). Since the effect is not affected after the number of transport layers in a combination of transport layers is exchanged, for example, the number of transport layers corresponding to the first CDM group of two CDM groups is 1 and the number of transport layers corresponding to the second CDM is 2 (e.g., it can be expressed by {1, 2}), which is equivalent to {2, 1}, so the case of {1, 2} is not indicated in Table 1. It can be seen that Table 1 does not contain the flips between layers. In some examples, Rank = 3 indicates the scenario of {1, 2} and does not indicate {2, 1}.

For example, when index = 3 in Table 2, Rank = 3 (indicating that the total number of transport layers is 3), two CDM groups are used, where the number of transport layers corresponding to the first CDM group is 2, and the number of transport layers corresponding to the second CDM group is 1 (denoted by {2, 1} in Table 1). When index = 5 in Table 2, Rank = 3 (indicating that the total number of transport layers is 3), indicating that two CDM groups are used, where the number of transport layers corresponding to the first CDM group is 1, and the number of transport layers corresponding to the second CDM group is 2 (represented by {1, 2} in Table 2). It can be seen that Table 2 contains the flips between layers. When using Table 2, the interchange between the number of transport layers corresponds to different distribution manner, so it needs to be indicated by different indexes, for example, {1, 2} and {2, 1} are not equivalent.

Further, in an implementation of Tables 1 and 2, the Rank column is optional, and the terminal device can sum the number of transport layers corresponding to various CDM groups to obtain the total Rank value, thus eliminating the need to embody Rank in the tables.

In another embodiment, the column of the number of CDM groups (i.e., K) is optional, and the terminal device can obtain the value of K according to the indicated number of transport layers, so that it is not necessary to embody it in the table. For example, K = 2 corresponding to the number of transport layers combination {1, 2}, and K = 3 corresponding to the number of transport layers combination {1, 2, 2}.

In Tables 1 and 2, there is a correlation between Rank (Rank is equal to the total number of transport layers), the number of CDM groups used, and the combination of transport layer numbers, for example, the sum of the number of transport layers corresponding to all CDM groups is equal to Rank. Further, Tables 1 and 2 are for the case where each CDM group contains two DMRS ports, and thus the value of the number of transport layers in the number of transport layers combination may be 1 or 2.

In actual use, only a part of Table 1 or a part of Table 2 may be used.

For example, if the network device configures the terminal device to use only a partial value of Rank (e.g., a Rank indication restriction (RI restriction) is configured), the table may include only the contents in the row corresponding to the partial value of Rank configured by the network device. Optionally, the terminal device only uses the rows corresponding to the partial Rank values configured by the network device in the table, and does not use other rows. In an example, when the network device configures the terminal device to use only Rank = 1, 2, and 4, only the rows corresponding to Rank = 1, 2, and 4 are used in actual use.

For another example, if the network device limits the maximum value of the total number of transport layers (referred to as the maximum number of transport layers for short), the table may include only the contents in the row whose Rank is less than or equal to the maximum number of transport layers. Optionally, the terminal device only uses the row whose Rank is less than or equal to the maximum number of transport layers in the table, and does not use other rows. In an example, when the maximum number of transport layers configured by the network device is 4, in actual use, only rows corresponding to Rank less than or equal to 4, that is, rows corresponding to Rank = 1, 2, 3, and 4 are used.

It will be readily understood that the length of the bits used to indicate the value of the index can be shortened in the case where only part of the contents of the table are used. In the subsequent tables, only a part of the tables may be used when actually used, and the present disclosure will not describe them in detail.

In addition, in Table 1, as the index value increases, the index values are arranged in descending order of Rank. For the same Rank, it is arranged in descending order of the number of CDM groups. In other embodiments, as the index value increases, the number of CDM groups may be arranged in descending order. For the same number of CDM groups, they can be arranged in descending order of Rank. For example, indexes = 0 and 1 represent a case where the number of CDM groups = 1 (where index = 0 represents a case where the number of CDM groups = 1 and Rank = 1, index = 1 represents a case where the number of CDM groups = 1 and Rank = 2). Index = 2, 3, and 4, indicating the case where the number of CDM groups = 2, and so on. In the case where the number of Rank or CDM groups is not directly indicated in the table, the above method can still be used to arrange the number of transport layers combinations, wherein the Rank value can be obtained by summing the number of transport layers corresponding to each CDM group, and the value of K (that is, the number of CDM groups used) can be obtained by the number of transport layers indicated. That is, the combination of the number of transport layers indicated by the index may be arranged in descending order of the result of summing the number of transport layers corresponding to the respective CDM groups (in descending order of the number of transport layers indicated if the result is the same), or in descending order of the number of transport layers indicated (in descending order of the result of summing the number of transport layers corresponding to the respective CDM groups if the number is the same).

In Table 2, they are listed in order of Rank from smallest to largest.

In Tables 1 and 2, the physical meanings represented by different values of the indexes are merely examples, and the embodiments of the present disclosure do not limit them. As in Table 1 or Table 2, only for the case where the maximum number of transport layers is 8. For the case where the maximum number of transport layers is greater than 8, it can be directly expanded based on the table below.

**Table 1**

| Index | Rank | Number of CDM groups used | layer split |
|---|---|---|---|
| 0 | 1 | 1 | {1} |
| 1 | 2 | 1 | {2} |
| 2 | 2 | 2 | {1,1} |
| 3 | 3 | 2 | {2,1} |
| 4 | 3 | 3 | {1,1,1} |
| 5 | 4 | 2 | {2,2} |
| 6 | 4 | 3 | {2,1,1} |
| 7 | 4 | 4 | {1,1,1,1} |
| 8 | 5 | 3 | {2,2,1} |
| 9 | 5 | 4 | {2,1,1,1} |
| 10 | 5 | 5 | {1,1,1,1,1} |
| 11 | 6 | 3 | {2,2,2} |
| 12 | 6 | 4 | {2,2,1,1} |
| 13 | 6 | 5 | {2,1,1,1,1} |
| 14 | 6 | 6 | {1,1,1,1,1,1} |
| 15 | 7 | 4 | {2,2,2,1} |
| 16 | 7 | 5 | {2,2,1,1,1} |
| 17 | 7 | 6 | {2,1,1,1,1,1} |
| 18 | 7 | 7 | {1,1,1,1,1,1,1} |
| 19 | 8 | 4 | {2,2,2,2} |
| 20 | 8 | 5 | {2,2,2,1,1} |
| 21 | 8 | 6 | {2,2,1,1,1,1} |
| 22 | 8 | 7 | {2,1,1,1,1,1,1} |
| 23 | 8 | 8 | (1,1,1,1,1,1,1,1) |

**Table 2**

| Index | Rank | layer split |
|---|---|---|
| 0 | 1 | {1} |
| 1-2 | 2 | {1,1} {2} |
| 3-5 | 3 | {2,1} {1,1,1} {1,2} |
| 6-10 | 4 | {2,2} {2,1,1} {1,1,1,1} {1,2,1} {1,1,2} |
| 11-18 | 5 | {2,2,1} {2,1,2} {1,2,2} {2,1,1,1} {1,2,1,1} {1,1,2,1} {1,1,1,2} {1,1,1, 1,1} |
| 19-31 | 6 | {2,2,2} {2,2,1,1} {2,1,2,1} {2,1,1,2} {1,2,2,1} {1,2,1,2} {1,1,2,2} {2, 1,1,1,1} {1,2,1,1,1} {1,1,2,1,1} {1,1,1,2,1} {1,1,1,1,2} {1,1,1,1,1,1} |
| 32-52 | 7 | {2,2,2,1} {2,2,1,2} {2,1,2,2} {1,2,2,2} {2,2,1,1,1} {2,1,2,1,1} {2,1,1, 2,1} {2,1,1,1,2} {1,2,2,1,1} {1,2,1,2,1} {1,2,1,1,2} {1,1,2,2,1} {1,1,2, 1,2} {1,1,1,2,2} {2,1,1,1,1,1} {1,2,1,1,1,1} {1,1,2,1,1,1} {1,1,1,2,1,1 } {1,1,1,1,2,1} {1,1,1,1,1,2} {1,1,1,1,1,1,1} |
| 53-86 | 8 | {2,2,2,2} {2,2,2,1,1} {2,2,1,2,1} {2,2,1,1,2} {2,1,2,1,2} {2,1,2,2,1} { 2,1,1,2,2} {1,2,2,2,1} {1,2,2,1,2} {1,2,1,2,2} {1,1,2,2,2} {2,2,1,1,1,1 } {2,1,2,1,1,1} {2,1,1,2,1,1} {2,1,1,1,2,1} {2,1,1,1,1,2} {1,2,2,1,1,1} { 1,2,1,2,1,1 } { 1,2,1,1,2,1 } { 1,2,1,1,1,2 } { 1,1,2,2,1,1 } { 1,1,2,1,2,1 } { 1,1,2,1,1,2} {1,1,1,2,2,1} {1,1,1,2,1,2} {1,1,1,1,2,2} {2,1,1,1,1,1,1} {1,2,1,1,1,1,1} {1,1,2,1,1,1,1} {1,1,1,2,1,1,1} {1,1,1,1,2,1,1} {1,1,1, 1,1,2,1} {1,1,1,1,1,1,2} {1,1,1,1,1,1,1,1} |

The case where each CDM group contains four DMRS ports is shown in Table 3 or Table 4, where Table 3 does not contain inter-layer flips and Table 4 contains inter-layer flips. Here, the numbers of transport layers in a combination of transport layers in Table 3 can be interchanged without affecting the effect. For example, {3, 2} and {2, 3} are equivalent, and {3, 2, 2}, {2, 3, 2}, {2, 2, 3} are equivalent.

For example, when index = 4 in Table 3, it means Rank = 3 (indicating that the total number of transport layers is 3), two CDM groups are used, where the number of transport layers corresponding to the first CDM group is 2 and the number of transport layers corresponding to the second CDM group is 1 (indicated by {2, 1} in Table 3). Since the effect is not affected after the numbers of transport layers in a combination of transport layers are exchanged, for example, the number of transport layers corresponding to the first CDM group of two CDM groups is 1 and the number of transport layers corresponding to the second CDM is 2 (as can be expressed by {1, 2}), which is equivalent to {2, 1}, and thus the case of {1, 2} is not indicated in Table 3. It can be seen that Table 3 does not contain the flips between layers. In some examples, Rank = 3 is adopted to indicate the scenario of {1, 2} but does not indicate {2, 1}.

For example, when index = 4 in Table 4, it means Rank = 3 (indicating that the total number of transport layers is 3), two CDM groups are used, where the number of transport layers corresponding to the first CDM group is 2, and the number of transport layers corresponding to the second CDM group is 1. When index = 6 in Table 4, it means Rank = 3 (indicating that the total number of transport layers is 3), and two CDM groups are used, where the number of transport layers corresponding to the first CDM group is 1, and the number of transport layers corresponding to the second CDM group is 2. It can be seen that Table 4 contains the flips between layers. When using Table 4, the interchange between the numbers of transport layers corresponds to different distribution manners, so it needs to be indicated by different indexes, for example, {1, 2} and {2, 1} are not equivalent.

Further, in an implementation of Tables 3 and 4, the Rank column is optional, and the terminal device can sum the number of transport layers corresponding to each CDM group to obtain the total Rank value, thus eliminating the need to embody Rank in the table.

In another embodiment, the column of the number of CDM groups (i.e., K) is optional, and the terminal device can obtain the value of K according to the indicated number of transport layers, so that it does not need to be embodied in the table. For example, K = 2 corresponding to the number of transport layers combination {2, 1}, and K = 3 corresponding to the number of transport layers combination {2, 1, 1}.

In Tables 3 and 4, there is a correlation between Rank (Rank is equal to the total number of transport layers), the number of CDM groups used, and the combination of numbers of transport layers, for example, the sum of the numbers of transport layers corresponding to all CDM groups is equal to Rank. Further, Tables 3 and 4 are for the case where each CDM group contains 4 DMRS ports, and thus the value of the number of transport layers in the number of transport layers combination may be 1, 2, 3, or 4.

In addition, in Table 3, as the index value increases, the index value is arranged in descending order of Rank. For the same Rank, it is arranged in descending order of the number of CDM groups. In other embodiments, the number of CDM groups may be arranged in descending order. For the same number of CDM groups, they can be arranged in descending order of Rank. For example, indexes = 0, 1, 2, and 3 indicate a case where the number of CDM groups = 1 (where index = 0 indicates a case where the number of CDM groups = 1 and Rank = 1, index = 1 indicates a case where the number of CDM groups = 1 and Rank = 2; index = 3 indicates a case where the number of CDM groups = 1 and Rank = 3, index = 4 indicates a case where the number of CDM groups = 1 and Rank = 4). Indexes = 4, 5, 6, 7, 8, and 9, indicating the case where the number of CDM groups = 2, and so on. In the case where the number of Rank or CDM groups is not directly indicated in the table, the above method can still be used to arrange the number of transport layers combinations, wherein the Rank value can be obtained by summing the number of transport layers corresponding to each CDM group, and the value of K (that is, the number of CDM groups used) can be obtained by the number of transport layers indicated. That is, the combination of the number of transport layers indicated by the index may be arranged in descending order of the result of summing the number of transport layers corresponding to each CDM group (if the result is the same, the number of transport layers indicated is in descending order), or in descending order of the number of transport layers indicated (if the number is the same, the number of transport layers indicated is in descending order of the result of summing the number of transport layers corresponding to each CDM group).

In Table 4, they are listed in descending order of Rank.

In Tables 3 and 4, the meanings represented by different values of the indexes are merely examples, and the embodiments of the present disclosure do not limit them. In Table 3 or Table 4, only for the case where the maximum number of transport layers is 8. For the case where the maximum number of transport layers is greater than 8, it can be directly expanded based on the table below.

Further, in actual use, only a part of Table 3 or a part of Table 4 may be used. Specific methods can be described with reference to the above description of Tables 1 and 2, and will not be repeatedly described here.

**Table 3**

| Index | Rank | Number of CDM groups used | layer split |
|---|---|---|---|
| 0 | 1 | 1 | {1} |
| 1 | 2 | 1 | {2} |
| 2 | 2 | 2 | {1,1} |
| 3 | 3 | 1 | {3} |
| 4 | 3 | 2 | {2,1} |
| 5 | 3 | 3 | {1,1,1} |
| 6 | 4 | 1 | {4} |
| 7 | 4 | 2 | {2,2} |
| 8 | 4 | 3 | {2,1,1} |
| 9 | 4 | 4 | {1,1,1,1} |
| 10 | 5 | 2 | {3,2} |
| 11 | 5 | 3 | {2,2,1} |
| 12 | 5 | 4 | {2,1,1,1} |
| 13 | 5 | 5 | {1,1,1,1,1} |
| 14 | 6 | 2 | {3,3} |
| 15 | 6 | 3 | {2,2,2} |
| 16 | 6 | 4 | {2,2,1,1} |
| 17 | 6 | 5 | {2,1,1,1,1} |
| 18 | 6 | 6 | { 1,1,1,1,1,1 } |
| 19 | 7 | 2 | {4,3} |
| 20 | 7 | 3 | {3,2,2} |
| 21 | 7 | 4 | {2,2,2,1} |
| 22 | 7 | 5 | {2,2,1,1,1} |
| 23 | 7 | 6 | {2,1,1,1,1,1} |
| 24 | 7 | 7 | {1,1,1,1,1,1,1} |
| 25 | 8 | 2 | {4,4} |
| 26 | 8 | 3 | {3,3,2} |
| 27 | 8 | 4 | {2,2,2,2} |
| 28 | 8 | 5 | {2,2,2,1,1} |
| 29 | 8 | 6 | {2,2,1,1,1,1} |
| 30 | 8 | 7 | {2,1,1,1,1,1,1} |
| 31 | 8 | 8 | {1,1,1,1,1,1,1,1} |

**Table 4**

| Index | Rank | layer split |
|---|---|---|
| 0 | 1 | {1} |
| 1-2 | 2 | {1,1} {2} |
| 3-6 | 3 | {3} {2,1} {1,1,1} {1,2} |
| 7-12 | 4 | {4} {2,2} {2,1,1} {1,2,1} {1,1,1} {1,1,1,1} |
| 13-22 | 5 | {3,2} {2,3} {2,2,1} {2,1,2} {1,2,2} {2,1,1,1} {1,2,1,1} {1,1,2,1} {1,1,1,2} { 1,1,1,1,1} |
| 23-36 | 6 | {3,3} {2,2,2} {2,2,1,1} {2,1,2,1} {2,1,1,2} {1,2,2,1} {1,2,1,2} {1,1,2,2} {2, 1,1,1,1} {1,2,1,1,1} {1,1,2,1,1} {1,1,1,2,1} {1,1,1,1,2} {1,1,1,1,1,1} |
| 37-62 | 7 | {4,3} {3,4} {3,2,2} {2,3,2} {2,2,3} |
| | | {2,2,2,1} {2,2,1,2} {2,1,2,2} {1,2,2,2} {2,2,1,1,1} {2,1,2,1,1} {2,1,1,2,1} { 2,1,1,1,2} {1,2,2,1,1} {1,2,1,2,1} {1,2,1,1,2} {1,1,2,2,1} {1,1,2,1,2} {1,1,1, 2,2} {2,1,1,1,1,1} {1,2,1,1,1,1 } {1,1,2,1,1,1} {1,1,1,2,1,1} {1,1,1,1,2,1} {1, 1,1,1,1,2} {1,1,1,1,1,1,1} |
| 63-100 | 8 | {4,4} {3,3,2} {3,2,3} {2,3,3} |
| | | {2,2,2,2} {2,2,2,1,1} {2,2,1,2,1} {2,2,1,1,2} {2,1,2,1,2} {2,1,2,2,1} {2,1,1, 2,2} {1,2,2,2,1} {1,2,2,1,2} {1,2,1,2,2} {1,1,2,2,2} {2,2,1,1,1,1} {2,1,2,1,1, 1} {2,1,1,2,1,1} {2,1,1,1,2,1} {2,1,1,1,1,2} {1,2,2,1,1,1} {1,2,1,2,1,1} {1,2, 1,1,2,1} {1,2,1,1,1,2} {1,1,2,2,1,1} {1,1,2,1,2,1} {1,1,2,1,1,2} {1,1,1,2,2,1 } {1,1,1,2,1,2} {1,1,1,1,2,2} {2,1,1,1,1,1,1} {1,2,1,1,1,1,1} {1,1,2,1,1,1,1} {1,1,1,2,1,1,1} {1,1,1,1,2,1,1} {1,1,1,1,1,2,1} {1,1,1,1,1,1,2} {1,1,1,1,1,1, 1,1} |
| 101-127 | reserve | |

Furthermore, the number of DMRS ports contained by each CDM group can be configured by the network device. For example, the network device uses RRC signaling to configure the number of DMRS ports included in each CDM group, and the network device may configure according to the capability of the terminal device and/or the capability of the sub-node. For example, if the network device preconfigures that each CDM group includes two DMRS ports, the terminal device may determine the number of transport layers corresponding to each CDM group according to the above Table 1 or Table 2. If the network device preconfigures that each CDM group includes four DMRS ports, the terminal device may determine the number of transport layers corresponding to each CDM group according to the above Table 3 or Table 4.

The network device transmits the PDSCH and the DMRS on the corresponding DMRS port from the activated K CDM groups. The terminal device determines a DMRS port corresponding to each CDM group based on the number of transport layers corresponding to each CDM group in the activated CDM group, thereby demodulating the PDSCH.

### Seventh embodiment

In the present embodiment, the terminal device determines the number of PDSCH transport layers corresponding to each of different CDM groups among the K CDM groups.

Specifically, the terminal device receives the DCI signaling transmitted by the network device, and determines the number of PDSCH transport layers corresponding to each of the K CDM groups according to the DCI signaling.

Accordingly, the network device sends a DCI signaling for determining the number of PDSCH transport layers corresponding to each of the K CDM groups.

In an embodiment, since the DCI signaling indicates the number of activated CDM groups, the DCI signaling may directly indicate the number of transport layers to which the activated CDM group corresponds. That is, for different values of K, the number of transport layers and the distribution manner of the transport layers in the K CDM groups may be indicated based on different tables through the same DCI signaling. Based on this method, the DCI signaling only needs to indicate the number of transport layers from the combination of the number of transport layers corresponding to one value of K, and does not need to indicate the number of transport layers from the combination of the number of transport layers corresponding to all the values of K (i.e., the method described in Embodiment 7), thereby effectively reducing the overhead of the DCI signaling.

In an example, the distribution manner of transport layers among K CDM groups is a combination of K number of transport layers, and K number of transport layers corresponds to K activated CDM groups one-to-one.

In an embodiment, in the K number of transport layers, the difference between the maximum value and the minimum value does not exceed O, O = 1 or 2. That is, among the number of transport layers corresponding to CDM groups actually used for PDSCH DMRS transmission among K CDM groups, the difference between the maximum number of transport layers and the minimum number of transport layers does not exceed O.

In an embodiment, if the number of transport layers corresponding to one CDM group is n, the first n DMRS ports of the corresponding CDM group are used for DMRS transmission of the terminal device. In another embodiment, the network device may additionally indicate, through higher layer signaling or physical layer signaling, 1-2 bits of information used to indicate which ports in the CDM group are used to transmit the DMRS.

In the following description, it is assumed that the difference between the maximum number of transport layers and the minimum number of transport layers does not exceed 1. Without this limitation, the corresponding table can be directly expanded to support more transport layer combinations.

Examples where each CDM group contains 2 DMRS ports are shown in Tables 5-11 or Tables 12-18. Tables 5-11 do not contain flips between layers (similar to the case of Tables 1 and 3 above, see the description of Tables 1 and 3). Tables 12-18 contain flips between layers (similar to the case of Tables 2 and 4 above, refer to the description of Tables 2 and 4). Here, the number of transport layers in one combination of transport layer numbers in Tables 5 to 11 can be interchanged without affecting the effect, for example, {1, 2} and {2, 1} are equivalent, and {1, 1, 2, 2}, {1, 2, 1, 2}, {1,2,2,1}, {2, 1, 2, 1}, {2, 1, 1, 2} and {2, 2, 1, 1} are equivalent.

In Tables 5-18, there is a correlation between Rank (Rank is equal to the total number of transport layers) and the combination of transport layers, for example, the sum of the number of transport layers corresponding to all CDM groups is equal to Rank. Further, Tables 5 to 18 are for the case where each CDM group contains two DMRS ports, and thus the value of the number of transport layers in the number of transport layers combination may be 1 or 2.

Further, in an implementation of Tables 5-18, the Rank column is optional, and the terminal device may sum the number of transport layers corresponding to each CDM group to obtain the total Rank value, thus eliminating the need to embody the Rank in the table.

In Tables 5-18, as the index value increases, the number of transport layers combinations are arranged in order of Rank (Rank is equal to the total number of transport layers) from smaller to larger. In the case where the Rank is not directly indicated in the table, the combination of the number of transport layers indicated by the index may be arranged in descending order according to the result of summing the number of transport layers corresponding to each CDM group.

The network device indicates, by DCI signaling, an index corresponding to a Rank value and a combination of the number of transport layers, Rank being equal to the total number of transport layers. According to this index, the terminal can determine the number of transport layers corresponding to K CDM groups from the table corresponding to the current K. That is, different values of K correspond to different tables, and the terminal device determines which table to use to obtain the transport layer number combination according to the value of K indicated by the DCI signaling. Then, the specific transport layer number combination is determined from the table corresponding to the K value through the index indicated by the DCI signaling. The length of the index may be determined according to the number of transport layer number combinations indicated by the index, for example, if three transport layer number combinations are indicated in Table 6, the length of the index may be set to 3 bits, and the three values of the index are used to indicate the three transport layer number combinations, respectively, and the remaining five values are reserved values.

Tables 5-11 are used to determine the combination of the number of transport layers for K activated CDM groups in the case of K = 1, 2, 3, 4, 5, 6, 7, respectively. Tables 12-18 are used to determine the combination of the number of transport layers for K activated CDM groups for the case of K = 1, 2, 3, 4, 5, 6, 7, respectively. When K = 8, it is not necessary to indicate the combination of the number of transport layers by DCI signaling, and the only combination of the number of transport layers is {1, 1, 1, 1, 1, 1, 1, 1}.

For example, in the case where each CDM group contains two DMRS ports, when K = 2, the terminal device determines to use Table 6 or Table 13 to obtain the transport layer number combination according to the K value. The combination of transport layer numbers is then determined from Table 6 or Table 13 by the index indicated by the DCI signaling.

Note that this embodiment only addresses the case where the maximum number of transport layers is 8. For the case where the number of transport layers is greater than 8, it can be directly expanded based on the following table.

**Table 5 Number of activated CDM groups K=1**

| Index | Rank | layer split |
|---|---|---|
| 0 | 1 | {1} |
| 1 | 2 | {2} |
| 2-8 | reserve | |

**Table 6 Number of activated CDM groups K=2**

| Index | Rank | layer split |
|---|---|---|
| 0 | 2 | {1,1} |
| 1 | 3 | {2,1} |
| 2 | 4 | {2,2} |
| 3-8 | reserve | |

**Table 7 Number of activated CDM groups K=3**

| Index | Rank | layer split |
|---|---|---|
| 0 | 3 | {1,1,1} |
| 1 | 4 | {2,1,1} |
| 2 | 5 | {2,2,1} |
| 3 | 6 | {2,2,2} |
| 4-8 | reserve | |

**Table 8 Number of activated CDM groups K=4**

| Index | Rank | layer split |
|---|---|---|
| 0 | 4 | {1,1,1,1} |
| 1 | 5 | {2,1,1,1} |
| 2 | 6 | {2,2,1,1} |
| 3 | 7 | {2,2,2,1} |
| 4 | 8 | {2,2,2,2} |
| 5-8 | reserve | |

**Table 9 Number of activated CDM groups K=5**

| Index | Rank | layer split |
|---|---|---|
| 0 | 5 | {1,1,1,1,1} |
| 1 | 6 | {2,1,1,1,1} |
| 2 | 7 | {2,2,1,1,1} |
| 3 | 8 | {2,2,2,1,1} |
| 4-8 | reserve | |

**Table 10 Number of activated CDM groups K=6**

| Index | Rank | layer split |
|---|---|---|
| 0 | 6 | {1,1,1,1,1,1} |
| 1 | 7 | {2,1,1,1,1,1} |
| 2 | 8 | {2,2,1,1,1,1} |
| 3-8 | reserve | |

**Table 11 Number of activated CDM groups K=7**

| Index | Rank | | layer split |
|---|---|---|---|
| 0 | 7 | { 1, 1, 1, 1, 1, 1, 1 } | |
| 1 | 8 | {2,1,1,1,1,1,1} | |
| 2-8 | reserve | | |

**Table 12 Number of activated CDM groups K=1**

| Index | Rank | layer split |
|---|---|---|
| 0 | 1 | {1} |
| 1 | 2 | {2} |
| 2-31 | reserve | |

**Table 13 Number of activated CDM groups K=2**

| Index | Rank | layer split |
|---|---|---|
| 0 | 2 | {1,1} |
| 1-2 | 3 | {2,1} {1,2} |
| 3 | 4 | {2,2} |
| 4-31 | reserve | |

**Table 14 Number of activated CDM groups K=3**

| Index | Rank | layer split |
|---|---|---|
| 0 | 3 | {1,1,1} |
| 1-3 | 4 | {2,1,1} {1,2,1} {1,1,2} |
| 4-6 | 5 | {2,2,1} {2,1,2} {1,2,2} |
| 7 | 6 | {2,2,2} |
| 8-31 | reserve | |

**Table 15 Number of activated CDM groups K=4**

| Index | Rank | layer split |
|---|---|---|
| 0 | 4 | {1,1,1,1} |
| 1-4 | 5 | {2,1,1,1} {1,2,1,1} {1,1,2,1} {1,1,1,2} |
| 5-10 | 6 | {2,2,1,1} {2,1,2,1} {2,1,1,2} {1,2,2,1} {1,2,1 ,2} {1,1,2,2} |
| 11-14 | 7 | {2,2,2,1} {2,2,1,2} {2,1,2,2} {1,2,2,2} |
| 15-31 | 8 | {2,2,2,2} |

**Table 16 Number of activated CDM groups K=5**

| Index | Rank | layer split |
|---|---|---|
| 0 | 5 | { 1, 1, 1, 1, 1 } |
| 1-5 | 6 | {2,1,1,1,1} {1,2,1,1,1} {1,1,2,1,1} {1,1,1,2,1 } {1,1,1,1,2} |
| 6-15 | 7 | {2,2,1,1,1} {2,1,2,1,1} {2,1,1,2,1} {2,1,1,1,2 } {1,2,2,1,1} {1,2,1,2,1} {1,2,1,1,2} {1,1,2,2, 1} {1,1,2,1,2} {1,1,1,2,2} |
| 16-25 | 8 | {2,2,2,1,1} {2,2,1,2,1} {2,2,1,1,2} {2,1,2,1,2 |
| | | } (2,1,2,2,1} {2,1,1,2,2} {1,2,2,2,1} {1,2,2,1, 2} {1,2,1,2,2} {1,1,2,2,2} |
| 26-31 | reserve | |

**Table 17 Number of activated CDM groups K=6**

| Index | Rank | layer split |
|---|---|---|
| 0 | 6 | { 1, 1, 1, 1, 1, 1 } |
| 1-6 | 7 | {2,1,1,1,1,1} {1,2,1,1,1,1} {1,1,2,1,1,1} {1, 1,1,2,1,1} {1,1,1,1,2,1} {1,1,1,1,1,2} |
| 7-21 | 8 | {2,2,1,1,1,1} {2,1,2,1,1,1} {2,1,1,2,1,1} {2, 1,1,1,2,1} {2,1,1,1,1,2} {1,2,2,1,1,1} {1,2,1 ,2,1,1} {1,2,1,1,2,1} {1,2,1,1,1,2} {1,1,2,2, 1,1} {1,1,2,1,2,1} {1,1,2,1,1,2} {1,1,1,2,2,1 } {1,1,1,2,1,2} {1,1,1,1,2,2} |
| 22-31 | reserve | |

**Table 18 Number of activated CDM groups K=7**

| Index | Rank | layer split |
|---|---|---|
| 0 | 7 | { 1, 1, 1, 1, 1, 1, 1 } |
| 1-7 | 8 | {2,1,1,1,1,1,1} {1,2, 1,1,1,1,1} {1,1,2,1,1,1, 1} {1,1,1,2,1,1,1} {1,1,1,1,2,1,1} {1,1,1,1,1, 2,1}{1,1,1,1,1,1,2} |
| 8-31 | reserve | |

Examples in which each CDM group contains four DMRS ports are shown in Tables 19-25 or in Tables 26-32. Tables 19-25 do not contain flips between layers (similar to the case of Tables 1 and 3 above, see the description of Tables 1 and 3). Tables 26-32 contain flips between layers (similar to the case of Tables 2 and 4 above, refer to the description of Tables 2 and 4). Here, the numbers of transport layers in a combination of transport layers in Tables 19 to 25 can be interchanged without affecting the effect, for example, {3, 2} and {2, 3} are equivalent, and {2, 2, 3, 3} and {2, 3, 3, 2} are equivalent.

In Tables 19-32, there is a correlation between Rank (Rank is equal to the total number of transport layers) and the combination of transport layers, for example, the sum of the number of transport layers corresponding to all CDM groups is equal to Rank. Further, Tables 19-32 are for the case where each CDM group contains 4 DMRS ports, and thus the value of the number of transport layers in combination of the numbers of transport layers may be 1, 2, 3, or 4.

Further, in an implementation of Tables 19-32, the Rank column is optional, and the terminal device may sum the number of transport layers corresponding to each CDM group to obtain the total Rank value, thereby eliminating the need to embody the Rank in the table.

In Tables 19-32, as the index value increases, the number of transport layers combinations are arranged in order of Rank (Rank is equal to the total number of transport layers) from smaller to larger. In the case where the Rank is not directly indicated in the table, the combination of the number of transport layers indicated by the index may be arranged in descending order according to the result of summing the number of transport layers corresponding to each CDM group.

Tables 19-25 are used to determine the combination of the number of transport layers for K activated CDM groups for the case of K = 1, 2, 3, 4, 5, 6, 7, respectively. Tables 26-32 are used to determine the combination of the number of transport layers for K activated CDM groups in the case of K = 1, 2, 3, 4, 5, 6, 7, respectively. When K = 8, it is not necessary to indicate the combination of the number of transport layers by DCI signaling, and the only combination of the number of transport layers is {1, 1, 1, 1, 1, 1, 1, 1}.

For example, in the case where each CDM group contains 4 DMRS ports, when K is 3, the terminal device determines to use Table 21 or Table 28 to obtain the transport layer number combination according to the value of K. The combination of transport layers is then determined from Table 21 or Table 28 by the index indicated by the DCI signaling.

Note that the present embodiment only addresses the case where the maximum number of transport layers is eight. For the case where the number of transport layers is greater than 8, it can be directly expanded based on the following table.

**Table 19 Number of activated CDM groups K=1**

| Index | Rank | layer split |
|---|---|---|
| 0 | 1 | {1} |
| 1 | 2 | {2} |
| 2 | 3 | {3} |
| 3 | 4 | {4} |
| 4-8 | reserve | |

**Table 20 Number of activated CDM groups K=2**

| Index | Rank | layer split |
|---|---|---|
| 0 | 2 | {1,1} |
| 1 | 3 | {2,1} |
| 2 | 4 | {2,2} |
| 3 | 5 | {3,2} |
| 4 | 6 | {3,3} |
| 5 | 7 | {4,3} |
| 6 | 8 | {4,4} |
| 7-8 | reserve | |

**Table 21 Number of activated CDM groups K=3**

| Index | Rank | layer split |
|---|---|---|
| 0 | 3 | {1,1,1} |
| 1 | 4 | {2,1,1} |
| 2 | 5 | {2,2,1} |
| 3 | 6 | {2,2,2} |
| 4 | 7 | {3,2,2} |
| 5 | 8 | {3,3,2} |
| 6-8 | reserve | |

**Table 22 Number of activated CDM groups K=4**

| Index | Rank | layer split |
|---|---|---|
| 0 | 4 | {1,1,1,1} |
| 1 | 5 | {2,1,1,1} |
| 2 | 6 | {2,2,1,1} |
| 3 | 7 | {2,2,2,1} |
| 4 | 8 | {2,2,2,2} |
| 5-8 | reserve | |

**Table 23 Number of activated CDM groups K=5**

| Index | Rank | layer split |
|---|---|---|
| 0 | 5 | {1,1,1,1,1} |
| 1 | 6 | {2,1,1,1,1} |
| 2 | 7 | {2,2,1,1,1} |
| 3 | 8 | {2,2,2,1,1} |
| 4-8 | reserve | |

**Table 24 Number of activated CDM groups K=6**

| Index | Rank | layer split |
|---|---|---|
| 0 | 6 | {1,1,1,1,1,1 } |
| 1 | 7 | {2,1,1,1,1,1} |
| 2 | 8 | {2,2,1,1,1,1} |
| 3-8 | reserve | |

**Table 25 Number of activated CDM groups K=7**

| Index | Rank | layer split |
|---|---|---|
| 0 | 7 | {1,1,1,1,1,1,1} |
| 1 | 8 | {2,1,1,1,1,1,1} |
| 2-8 | reserve | |

**Table 26 Number of activated CDM groups K=1**

| Index | Rank | layer split |
|---|---|---|
| 0 | 1 | {1} |
| 1 | 2 | {2} |
| 2 | 3 | {3} |
| 3 | 4 | {4} |
| 4-31 | reserve | |

**Table 27 Number of activated CDM groups K=2**

| Index | Rank | layer split |
|---|---|---|
| 0 | 2 | {1,1} |
| 1-2 | 3 | {2,1} {1,2} |
| 3 | 4 | {2,2} |
| 4-5 | 5 | {3,2} {2,3} |
| 6 | 6 | {3,3} |
| 7-8 | 7 | {4,3} {3,4} |
| 9 | 8 | {4,4} |
| 10-31 | reserve | |

**Table 28 Number of activated CDM groups K=3**

| Index | Rank | layer split |
|---|---|---|
| 0 | 3 | {1,1,1} |
| 1-3 | 4 | {2,1,1} {1,2,1} {1,1,2} |
| 4-6 | 5 | {2,2,1} {2,1,2} {1,2,2} |
| 7 | 6 | {2,2,2} |
| 8-10 | 7 | {3,2,2}{2,3,2}{2,2,3} |
| 11-13 | 8 | {3,3,2} {3,2,3} {2,3,3} |
| 14-31 | reserve | |

**Table 29 Number of activated CDM groups K=4**

| Index | Rank | layer split |
|---|---|---|
| 0 | 4 | {1,1,1,1} |
| 1-4 | 5 | {2,1,1,1} {1,2,1,1} {1,1,2,1} {1,1,1,2} |
| 5-10 | 6 | {2,2,1,1} {2,1,2,1} {2,1,1,2} {1,2,2,1} {1,2,1,2 |
| | | }{ 1,1,2,2} |
| 11-14 | 7 | {2,2,2,1} {2,2,1,2} {2,1,2,2} {1,2,2,2} |
| 15 | 8 | {2,2,2,2} |
| 16-31 | reserve | |

**Table 30 Number of activated CDM groups K=5**

| Index | Rank | layer split |
|---|---|---|
| 0 | 5 | { 1, 1, 1, 1, 1 } |
| 1-5 | 6 | {2,1,1,1,1} {1,2,1,1,1} {1,1,2,1,1} {1,1,1,2,1 } {1,1,1,1,2} |
| 6-15 | 7 | {2,2,1,1,1} {2,1,2,1,1} {2,1,1,2,1} {2,1,1,1,2 } {1,2,2,1,1} {1,2,1,2,1} {1,2,1,1,2} {1,1,2,2, 1} {1,1,2,1,2} {1,1,1,2,2} |
| 16-25 | 8 | (2,2,2,1,1} {2,2,1,2,1} {2,2,1,1,2} {2,1,2,1,2 } {2,1,2,2,1} {2,1,1,2,2} {1,2,2,2,1} {1,2,2,1, 2} {1,2,1,2,2} {1,1,2,2,2} |
| 26-31 | reserve | |

**Table 31 Number of activated CDM groups K=6**

| Index | Rank | layer split |
|---|---|---|
| 0 | 6 | { 1, 1, 1, 1, 1, 1 } |
| 1-6 | 7 | {2,1,1,1,1,1} {1,2,1,1,1,1} {1,1,2,1,1,1} {1,1, 1,2,1,1} {1,1,1,1,2,1} {1,1,1,1,1,2} |
| 7-21 | 8 | {2,2,1,1,1,1} {2,1,2,1,1,1} {2,1,1,2,1,1} {2,1, 1,1,2,1}{2,1,1,1,1,2}{1,2,2,1,1,1}{1,2,1,2,1, 1} {1,2,1,1,2,1} {1,2,1,1,1,2} {1,1,2,2,1,1} {1, 1,2,1,2,1} {1,1,2,1,1,2} {1,1,1,2,2,1} {1,1,1,2, 1,2} {1,1,1,1,2,2} |
| 22-31 | reserve | |

**Table 32 Number of activated CDM groups K=7**

| Index | Rank | layer split |
|---|---|---|
| 0 | 7 | {1,1,1,1,1,1,1} |
| 1-7 | 8 | {2,1,1,1,1,1,1} {1,2,1,1,1,1,1} {1,1,2,1,1,1,1} {1,1,1,2,1,1,1} {1,1,1,1,2,1,1} {1,1,1,1,1,2,1} {1,1,1,1,1,1,2} |
| 8-31 | reserve | |

In actual use, only a portion of the contents in Tables 5-32 may be used. For example, if the network device configures the terminal device to use only a partial value of Rank (e.g., a Rank indication restriction (RI restriction) is configured), or the maximum value of the total number of transport layers is configured (referred to as the maximum number of transport layers for short, that is, the maximum value of Rank in the table), the table may only contain the contents of the row corresponding to the partial value of Rank satisfying the network device configuration. Optionally, the terminal device only uses the row corresponding to the partial Rank value satisfying the network device configuration in the table, and does not use the other row. For details, reference can be made to the above description of Tables 1 to 4, and details will not be described herein.

The network device transmits the PDSCH and the DMRS on the corresponding DMRS port from the activated K CDM groups. The terminal device determines a DMRS port corresponding to each CDM group based on the number of transport layers corresponding to each CDM group in the activated CDM group, thereby demodulating the PDSCH.

### Eighth embodiment

In the present embodiment, the terminal device determines the TCI state corresponding to the CDM group.

For example, the terminal device may determine the TCI state corresponding to different CDM groups among the activated CDM groups according to the DCI signaling. One of the following methods may be employed:

Method 1: M TCI states are indicated in DCI signaling, and the M TCI states correspond one-to-one to M CDM groups currently used for PDSCH transmission among the K TCI states.

In an example, the network device activates a plurality of TCI state groups through the MAC CE, different TCI state groups containing different numbers of TCI states, and then indicates the group containing M TCI states through DCI signaling, where M is the number of CDM groups currently used for PDSCH transmission.

In an example, a network device activates a plurality of TCI state groups through the MAC CE, each TCI state group containing K TCI states (i.e., M = K), where K is the number of currently activated CDM groups indicated by the network device through higher layer signaling, and the K TCI states correspond to the K activated CDM groups one-to-one.

In an example, the network device activates a plurality of TCI state groups through the MAC CE, each TCI state group containing M TCI states, where M is the number of CDM groups currently used for PDSCH transmission as indicated by the network device through higher layer signaling. One of the TCI state groups is then indicated by DCI signaling.

Method 2: M TCI states are indicated in DCI signaling, and the terminal device determines a TCI state corresponding to each CDM group currently used for PDSCH transmission among K activated CDM groups from among the M TCI states according to the correspondence relationship between the TCI state indicated by the network device through higher layer signaling in advance and the CDM group. For example, the network device may indicate that several CDM groups correspond to a first TCI state, several CDM groups correspond to a second TCI state, and so on.

Method 3: Two TCI states and a bitmap are indicated in DCI signaling, and the bitmap is used to indicate whether the corresponding TCI state of each CDM group of K CDM groups adopts the first or the second TCI state of the two TCI states, respectively. For example, the length of bitmap is K bits, and each bit corresponds to a CDM group. When the value of one bit in the bitmap is 1, it indicates that the CDM group corresponding to the bit adopts the first TCI state. When the value is 0, it indicates that the CDM group corresponding to the bit adopts the second TCI state. Optionally, when the value of one bit in the bitmap is 0, it indicates that the CDM group corresponding to the bit adopts the first TCI state, and when the value is 1, it indicates that the CDM group corresponding to the bit adopts the second TCI state.

In an embodiment, CDM groups corresponding to the same TCI state are associated with the same PTRS port.

In the above embodiments, the first to fourth embodiments describe various ways in which the terminal device determines the K activated CDM groups. The fifth to seventh embodiments describe various ways in which the terminal device determines the numbers of PDSCH transport layers corresponding to different CDM groups among K CDM groups, and/or the DMRS ports for PDSCH in each CDM group. The eighth embodiment describes a specific manner in which the terminal device determines the TCI state corresponding to the CDM group. The above-described embodiments may be arbitrarily combined, for example, in the manner described in any one of the first to fourth embodiments, the network device may activate a large number of CDM groups for the terminal device. Further, in the manner described in any one of the fifth to seventh embodiments, the network device indicates, to the terminal device, the number of DMRS ports and/or PDSCH transport layers corresponding to each CDM group. Further, according to the seventh embodiment, the network device indicates the TCI state corresponding to each CDM group to the terminal device, thereby indicating that a large number of low-port nodes are supported to perform joint transmission at the same time, thereby improving the throughput of downlink transmission.

An embodiment of the present disclosure also proposes a signal sending method, and FIG. 6 is a schematic flowchart of a signal sending method 600 according to an embodiment of the present disclosure. This method can be applied to the systems shown in FIGS. 1-3, but is not limited thereto. The method includes at least part of the following.

S610: the network device determines K activated CDM groups, K being a positive integer.

S620, the network device sends a DCI signaling for determining the DMRS ports for the PDSCH in the CDM groups.

Here, the K may be greater than 3.

In some embodiments, the network device further includes transmitting a PDSCH and a DMRS on a corresponding DMRS port from the K CDM groups.

In some embodiments, the DCI signaling is used for the terminal device to determine the number of PDSCH transport layers corresponding to each of different CDM groups among the K CDM groups, and to determine the DMRS port for PDSCH in the CDM group according to the number of PDSCH transport layers corresponding to each of different CDM groups among the K CDM groups.

In some embodiments, the DCI signaling includes first information indicating the number of PDSCH transport layers corresponding to each of the K CDM groups.

In some embodiments, the value range of the number of PDSCH transport layers corresponding to each CDM group is {1, 2}, or {0, 1, 2}, or {1, 2, 3, 4}, or {0, 1, 2, 3, 4}, or {0, 1, 2, NULL}, or {0, 1, 2, 3, NULL}. The number of PDSCH transport layers corresponding to each CDM group may be any numerical value in the value range.

Here, 0 may indicate that the CDM group is not used to transmit the DMRS, but the terminal device needs to perform rate matching on the resources occupied by the CDM group; NULL may indicate that the CDM group is not used to transmit the DMRS, and the terminal device does not need to perform rate matching on the resources occupied by the CDM group. Here, 0 and Null may also use other descriptions to indicate the same meaning, for example, the indications of the two may be interchanged.

In some embodiments, the DCI signaling includes second information indicating a value of K and third information indicating a combination of K transport layers corresponding to the value of K.

In some embodiments, the DCI signaling indicates the total number of transport layers and how the transport layers are allocated among the K CDM groups.

In some embodiments, the distribution of transport layers in the K CDM groups includes: a combination of k numbers of transport layers. Here, k is a positive integer less than or equal to K.

Here, the k numbers of transport layers correspond to the first k CDM groups among the K CDM groups, respectively.

Alternatively, the k numbers of transport layers correspond to the k CDM groups indicated by the network device among the K CDM groups, respectively.

In some embodiments, the difference between the maximum value of the number of transport layers and the minimum value of the number of transport layers among the k numbers of transport layers is less than or equal to 1. Optionally, the difference between the maximum value of the number of transport layers and the minimum value of the number of transport layers among the k numbers of transport layers is 2 or less.

In some embodiments, the method further includes at least one of the following steps:
the network device transmits higher layer signaling to the terminal device, the higher layer signaling being used to determine an activated CDM group;
the network device sends DCI signaling to the terminal device, the DCI signaling being used to determine an activated CDM group;
the network device sends DCI signaling to the terminal device, which is used to indicate the number of TCI states.

In some embodiments, the network device transmits higher layer signaling to the terminal device for determining an activated CDM group, including at least one of:
the network device sends a bitmap indicated by higher layer signaling, each bit in the bitmap corresponds to a CDM group, and each bit is used to determine whether the corresponding CDM group is an activated CDM group;
the network device transmits K indicated by higher layer signaling, K being used to determine the corresponding K activated CDM groups;
the network device sends the number of DMRS symbols indicated by the higher layer signaling, and the number of DMRS symbols is used to determine that the CDM group on the corresponding DMRS symbol is an activated CDM group;

The network device sends RRC signaling for determining the number of DMRS symbols and an MAC CE for determining the CDM group activated on the DMRS symbol corresponding to the number of DMRS symbols.

In some embodiments, the step that the network device sends a DCI signaling to the terminal device for determining an activated CDM group includes at least one of:
the network device transmits a bitmap indicated by the DCI signaling, each bit in the bitmap corresponds to a CDM group, and each bit is used to determine whether the corresponding CDM group is an activated CDM group;
the network device transmits K of the DCI signaling indication, K being used to determine the corresponding K activated CDM groups;
the network device transmits the number of DMRS symbols indicated by the DCI signaling, and the number of DMRS symbols is used to determine that the CDM group on the corresponding DMRS symbol is an activated CDM group.

In some embodiments, the number K of activated CDM groups is less than or equal to the maximum number of transport layers configured by the network device.

In some embodiments, the DCI signaling indicates DMRS ports for PDSCH within each of the K CDM groups.

The value range of the DMRS ports for the PDSCH in each CDM group may be {0, 1, 0-1}, or {0, 1, 0-1, Null}, or {0, 1, 2, 3, 0-1, 2-3, 0-2, 0-3}, or {0, 1, 2, 3, 0-1, 2-3, 0-2, 0-3, Null}. Here, NULL may indicate that the CDM group is not used to send the DMRS of the terminal device.

In some embodiments, the method further includes: the network device sends a DCI signaling for determining a TCI state corresponding to the CDM group.

In an example, M TCI states are indicated in DCI signaling, the M TCI states correspond to M CDM groups for PDSCH transmission among the K CDM groups, and M is a positive integer.

In an example, N TCI states are indicated in the DCI signaling, and the N TCI states are used for the terminal device to determine a TCI state corresponding to each CDM group for PDSCH transmission among the K CDM groups from the N TCI states according to a correspondence relationship between the TCI state indicated by the network device through higher layer signaling in advance and the CDM group; N is a positive integer.

In an example, a first TCI state, a second TCI state, and a bitmap are indicated in the DCI signaling, and the bitmap is used for indicating that the K TCI states adopt the first TCI state or the second TCI state, respectively.

In some embodiments, CDM groups corresponding to the same TCI state are associated with the same PTRS port.

By adopting the signal sending method proposed in the embodiment of the present disclosure, the network device can activate a large number of CDM groups for the terminal device, and indicate the DMRS ports, the number of transport layers, or the TCI state corresponding to each CDM group, thereby supporting a large number of low-port nodes to perform joint transmission at the same time, and improving the throughput of downlink transmission.

In summary, it can be seen that the embodiment of the present disclosure proposes a DMRS signal indication method, wherein a network device activates CDM groups for a terminal device, indicates at least one of CDM groups currently used for DMRS transmission, and transport layers, a DMRS ports, and TCI state corresponding to each CDM group through DCI signaling. In this way, a CDM group can be allocated to each sub-node in the multi-node communication system, thus supporting the simultaneous transmission mode of multi-nodes in a cell-free scenario and improving the throughput of downlink transmission.

The method proposed in the embodiment of the present disclosure can support more CDM groups, and each CDM group supports multiple ports (e.g., each CDM group supports 2 or 4 ports), thereby supporting more DMRS ports for simultaneous transmission of multiple nodes. Embodiments of the present disclosure propose a variety of methods for activating CDM groups, and the activated CDM groups can be used for transmitting DMRS or rate matching. In the embodiment of the present disclosure, the number of PDSCH transport layers corresponding to each activated CDM group, the DMRS port used by each activated CDM group, or the transport layer distribution method corresponding to the activated CDM group may be indicated by DCI signaling. Further, in the embodiment of the present disclosure, the TCI state corresponding to each activated CDM group may be indicated by DCI signaling. Using DCI signaling, higher layer signaling, and the like received from the network device, the terminal device can determine at least one of a CDM group activated by the network device for the terminal device and a DMRS port, a number of transport layers, and a TCI state corresponding to each activated CDM, thereby supporting joint transmission of a large number of low-port nodes, and improving the throughput of downlink transmission.

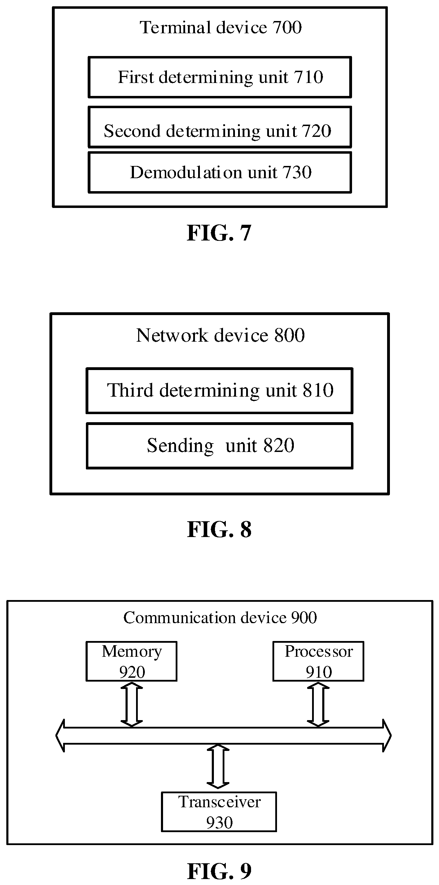

An embodiment of the present disclosure also provides a terminal device, and FIG. 7 is a schematic block diagram of a terminal device 700 according to an embodiment of the present disclosure. The terminal device 700 may include a first determining unit 710 and a second determining unit 720.

The first determining unit 710 for determining K activated CDM groups, K being a positive integer.

The second determining unit 720 is configured to receive DCI signaling from a network device, and determine a DMRS port for PDSCH in the CDM group according to the DCI signaling.

The demodulation unit 730 is configured to demodulate the PDSCH based on the DMRS port used for the PDSCH in the CDM group.

Here, K may be greater than 3.

In some embodiments, the second determining unit 720 is configured to: determine, based on the DCI signaling, a number of PDSCH transport layers corresponding to each of different CDM groups among the K CDM groups; determine DMRS ports for PDSCH in the CDM group according to the number of PDSCH transport layers corresponding to each of different CDM groups among the K CDM groups.

In some embodiments, the DCI signaling includes first information indicating a number of PDSCH transport layers corresponding to each of the K CDM groups;
In some embodiments, the second determining unit 720 is configured to determine the number of PDSCH transport layers corresponding to each CDM group of the K CDM groups according to the first information.

In some embodiments, the value range of the number of PDSCH transport layers corresponding to each CDM group is {1, 2}, or {0, 1, 2}, or {1, 2, 3, 4}, or {0, 1, 2, 3, 4}, or {0, 1, 2, NULL}, or {0, 1, 2, 3, NULL}. The number of PDSCH transport layers corresponding to each CDM group may be any numerical value in the value range.

In some embodiments, 0 indicates that the CDM group is not used to transmit DMRS, but the terminal device needs to perform rate matching on resources occupied by the CDM group.

NULL indicates that the CDM group is not used to transmit the DMRS, and the terminal device does not need to perform rate matching on the resources occupied by the CDM group.

In some embodiments, the DCI signaling includes second information indicating a value of K and third information indicating a combination of K number of transport layers corresponding to the value of K.

In some embodiments, the second determining unit 720 is configured to determine the number of PDSCH transport layers corresponding to each of the K CDM groups according to a combination of the value of K and the number of K transport layers corresponding to the value of K.

In some embodiments, the DCI signaling indicates the total number of transport layers and a distribution manner of transport layers in the K CDM groups.

In some embodiments, the second determining unit 720 is configured to determine the number of PDSCH transport layers corresponding to each CDM group of the K CDM groups according to the total number of transport layers and the distribution manner of transport layers in the K CDM groups.

In some embodiments, the distribution manner of transport layers in the K CDM groups includes: a combination of k numbers of transport layers. Here, k is a positive integer less than or equal to K.

The k numbers of transport layers correspond to the first k CDM groups among the K CDM groups, respectively.

The k numbers of transport layers correspond to k CDM groups indicated by the network device among the K CDM groups, respectively.

In some embodiments, the difference between the maximum value of the number of transport layers and the minimum value of the number of transport layers among the k numbers of transport layers is less than or equal to 1.

Alternatively, a difference between the maximum value of the number of transport layers and the minimum value of the number of transport layers among the k numbers of transport layers is less than or equal to 2.

In some embodiments, in case where the number of PDSCH transport layers corresponding to the CDM group is n (n being a positive integer), the second determining unit 720 is configured to determine that the n PDSCH transport layers of the CDM employ the first n DMRS ports in the CDM group, or determine n DMRS ports for the n PDSCH transport layers in the CDM group according to higher layer signaling or physical layer signaling indications.

In some embodiments, the first determining unit 710 is configured to determine K activated CDM groups from the L CDM groups agreed with the network device, wherein L is an integer greater than or equal to 3.

In some embodiments, the first determining unit 710 is configured to perform at least one of:
receiving higher layer signaling from the network device, determining activated CDM groups according to the higher layer signaling;
receiving DCI signaling from the network device, determining activated CDM groups according to the DCI signaling;
determining a number of activated CDM groups according to a maximum number of transport layers configured by the network device, and determining activated CDM groups according to the number;
determining the number of activated CDM groups according to the number of TCI states indicated in the DCI signaling, and determining the activated CDM groups according to the number.

In some embodiments, the first determining unit 710 is configured to perform at least one of:
receiving a bitmap indicated by higher layer signaling, wherein each bit in the bitmap corresponds to a CDM group, wherein the terminal device determines whether the corresponding CDM group is an activated CDM group according to each bit;
receiving the K indicated by higher layer signaling and determining corresponding K activated CDM groups;
receiving the number of DMRS symbols indicated by higher layer signaling, and determining that the CDM groups on the DMRS symbols corresponding to the number of DMRS symbols are activated CDM groups;
receiving RRC signaling and an MAC CE from the network device, determining a number of DMRS symbols according to the RRC signaling, and determining CDM groups activated on DMRS symbols corresponding to the number of DMRS symbols according to the MAC CE.

In some embodiments, the first determining unit 710 is configured to perform a process including at least one of:
receiving a bitmap indicated by the DCI signaling, wherein each bit in the bitmap corresponds to a CDM group, and the terminal device determines whether the corresponding CDM group is an activated CDM group according to each bit;
receiving K indicated by the DCI signaling and determining corresponding K activated CDM groups;
receiving the number of DMRS symbols indicated by the DCI signaling, and determining that the CDM groups on the DMRS symbols corresponding to the number of DMRS symbols are activated CDM groups.

In some embodiments, the number K of activated CDM groups is less than or equal to the maximum number of transport layers configured by the network device.

In some embodiments, the DCI signaling indicates DMRS ports for PDSCH within each of the K CDM groups.

In some embodiments, the second determining unit 720 is configured to determine, based on the DCI signaling, DMRS ports for PDSCH within each of the K CDM groups.

In some embodiments, the value range of the DMRS port for PDSCH within each CDM group is {0, 1, 0-1}, or {0, 1, 0-1, Null}, or {0, 1, 2, 3, 0-1, 2-3, 0-2, 0-3}, or {0, 1, 2, 3, 0-1, 2-3, 0-2, 0-3, Null}.

In some embodiments, NULL indicates that the CDM group is not used to send the DMRS of the terminal device.

In some embodiments, the second determining unit 720 is further configured to receive DCI signaling; determine a TCI state corresponding to the CDM group according to the DCI signaling state.

In some embodiments, M TCI states are indicated in the DCI signaling, the M TCI states corresponding to M CDM groups of the K CDM groups for PDSCH transmission, the M being a positive integer.

Optionally, N TCI states are indicated in the DCI signaling, and the terminal device determines a TCI state corresponding to each CDM group for PDSCH transmission among the K CDM groups from the N TCI states according to a correspondence relationship between the TCI state indicated by the network device through higher layer signaling in advance and the CDM group. The N is a positive integer.

Optionally, the DCI signaling indicates a first TCI state, a second TCI state, and a bitmap for indicating that the K TCI states adopt the first TCI state or the second TCI state, respectively.

In some embodiments, CDM groups corresponding to the same TCI state are associated with the same PTRS port.

The terminal device 700 according to the embodiment of the present disclosure can realize the corresponding function of the terminal device according to the above-described method embodiment. The flow, function, implementation, and beneficial effect corresponding to each module (sub-module, unit, component, etc.) in the terminal device can be described in the corresponding description in the above-described method embodiment, and will not be repeatedly described herein. The functions described with respect to each module (sub-module, unit, component, etc.) in the terminal device of the application embodiment may be implemented by different modules (sub-module, unit, component, etc.), or may be implemented by the same module (sub-module, unit, component, etc.).

Embodiments of the present disclosure also provide a network device. FIG. 8 is a schematic block diagram of a network device 800 according to an embodiment of the present disclosure. The terminal device 800 may include a third determining unit 810 and a sending unit 820.

The third determining unit 810 is configured to determine K activated CDM groups, K being a positive integer.

The sending unit 820 is configured to send DCI signaling for determining DMRS ports for PDSCH in the CDM groups.

Here, K may be greater than 3.

In some embodiments, the sending unit 820 is further configured to send the PDSCH and a DMRS on a corresponding DMRS port from the K CDM groups.

In some embodiments, the DCI signaling is used for the terminal device to determine the number of PDSCH transport layers corresponding to each of different CDM groups among the K CDM groups, and to determine the DMRS port for PDSCH in the CDM group according to the number of PDSCH transport layers corresponding to each of different CDM groups among the K CDM groups.

In some embodiments, the DCI signaling includes first information indicating a number of PDSCH transport layers corresponding to each of the K CDM groups.

In some embodiments, the value range of the number of PDSCH transport layers corresponding to each CDM group is {1, 2}, or {0, 1, 2}, or {1, 2, 3, 4}, or {0, 1, 2, 3, 4}, or {0, 1, 2, NULL}, or {0, 1, 2, 3, NULL}. The number of PDSCH transport layers corresponding to each CDM group may be any numerical value in the value range.

In some embodiments, 0 indicates that the CDM group is not used to transmit DMRS, but the terminal device needs to perform rate matching on resources occupied by the CDM group; NULL indicates that the CDM group is not used for transmitting DMRS, and the terminal device does not need to perform rate matching on the resources occupied by the CDM group.

In some embodiments, the DCI signaling includes second information indicating a value of K and third information indicating a combination of k numbers of transport layers corresponding to the value of K.

In some embodiments, the DCI signaling indicates the total number of transport layers and a distribution manner of transport layers among the K CDM groups.

In some embodiments, the distribution manner of transport layers in the K CDM groups includes: a combination of k numbers of transport layers. Here, k is a positive integer less than or equal to K.

Here, the k numbers of transport layers correspond to the first k CDM groups among the K CDM groups, respectively.

Optionally, the k numbers of transport layers correspond to k CDM groups indicated by the network device among the K CDM groups, respectively.

In some embodiments, the difference between the maximum value of the number of transport layers and the minimum value of the number of transport layers among the k numbers of transport layers is less than or equal to 1.

Optionally, a difference between the maximum value of the number of transport layers and the minimum value of the number of transport layers among the k numbers of transport layers is less than or equal to 2.

In some embodiments, the sending unit 820 is further configured to perform at least one of:
sending higher layer signaling to the terminal device, wherein the higher layer signaling is used to determine an activated CDM group;
sending DCI signaling to the terminal device, wherein the DCI signaling is used to determine an activated CDM group;
sending DCI signaling to the terminal device for indicating the number of TCI states.

In some embodiments, the sending unit 820 is configured to perform at least one of:
sending a bitmap indicated by higher layer signaling, wherein each bit in the bitmap corresponds to a CDM group, each bit is used to determine whether the corresponding CDM group is an activated CDM group;
sending K indicated by higher layer signaling for determining corresponding K activated CDM groups;
sending a number of DMRS symbols indicated by higher layer signaling, wherein the number of DMRS symbols is used to determine that the CDM group on the corresponding DMRS symbol is an activated CDM group;
sending RRC signaling for determining the number of DMRS symbols and an MAC CE for determining the CDM group activated on the DMRS symbol corresponding to the number of DMRS symbols.

In some embodiments, the sending unit 820 is configured to perform at least one of:
sending a bitmap indicated by a DCI signaling, wherein each bit in the bitmap corresponds to a CDM group, and each bit is used to determine whether the corresponding CDM group is an activated CDM group;
sending K indicated by a DCI signaling for determining corresponding K activated CDM groups;
sending the number of DMRS symbols indicated by the DCI signaling, wherein the number of DMRS symbols used to determine that the CDM group on the corresponding DMRS symbol is an activated CDM group.

In some embodiments, the number K of activated CDM groups is less than or equal to the maximum number of transport layers configured by the network device.

In some embodiments, the DCI signaling indicates a DMRS port for PDSCH within each of the K CDM groups, respectively.

In some embodiments, the value range of the DMRS port for PDSCH within each CDM group is {0, 1, 0-1}, or {0, 1, 0-1, Null}, or {0, 1, 2, 3, 0-1, 2-3, 0-2, 0-3}, or {0, 1, 2, 3, 0-1, 2-3, 0-2, 0-3, Null}. Here, NULL may indicate that the CDM group is not used to send the DMRS of the terminal device.

In some embodiments, the sending unit 820 is further configured to send DCI signaling for determining a TCI state corresponding to the CDM group.

In some embodiments, M TCI states are indicated in DCI signaling, the M TCI states correspond to M CDM groups of the K CDM groups for PDSCH transmission, and M is a positive integer.

Optionally, N TCI states are indicated in the DCI signaling, and the N TCI states are used for the terminal device to determine, from the N TCI states, a TCI state corresponding to each CDM group for PDSCH transmission among the K CDM groups according to a correspondence relationship between the TCI state and the CDM group indicated by the network device through higher layer signaling in advance. The N is a positive integer.

Optionally, a first TCI state, a second TCI state, and a bitmap indicating that the K TCI states adopt the first TCI state or the second TCI state, respectively, are indicated in the DCI signaling.

In some embodiments, CDM groups corresponding to the same TCI state are associated with the same PTRS port.

The network device 800 according to the embodiment of the present disclosure can implement the corresponding functions of the network device in the above-described method embodiment. Flows, functions, implementation methods, and beneficial effects corresponding to each module (sub-module, unit, component, etc.) in the network device can be described in the corresponding description in the above-described method embodiment, and will not be repeatedly described here. The functions described with respect to each module (sub-module, unit, component, etc.) in the network device of the application embodiment may be implemented by different modules (sub-module, unit, component, etc.), or may be implemented by the same module (sub-module, unit, component, etc.).

FIG. 9 is a schematic structural diagram of a communication device 900 according to an embodiment of the present disclosure. The communication device 900 includes a processor 910 that can call and run a computer program from a memory to cause the communication device 900 to implement the method in the embodiment of the present disclosure.

In an embodiment, the communication device 900 may further include a memory 920. Among them, the processor 910 may call and run a computer program from the memory 920 to cause the communication device 900 to implement the method in the embodiment of the present disclosure.

Here, the memory 920 may be a separate device independent of the processor 910 or may be integrated in the processor 910.

In an embodiment, the communication device 900 may further include a transceiver 930 that the processor 910 may control to communicate with other devices, in particular, may transmit information or data to or receive information or data transmitted by other devices.

Here, the transceiver 930 may include a transmitter and a receiver. The transceiver 930 may further include antennas, and the number of antennas may be one or more.

In an embodiment, the communication device 900 may be a terminal device of the embodiment of the present disclosure, and the communication device 900 may implement corresponding procedures implemented by the terminal device in each method of the embodiment of the present disclosure, and will not be repeated here for the sake of simplicity.

In an embodiment, the communication device 900 may be a network device according to an embodiment of the present disclosure, and the communication device 900 may implement corresponding procedures implemented by the network device in each method according to the embodiment of the present disclosure, and will not be described herein for the sake of brevity.

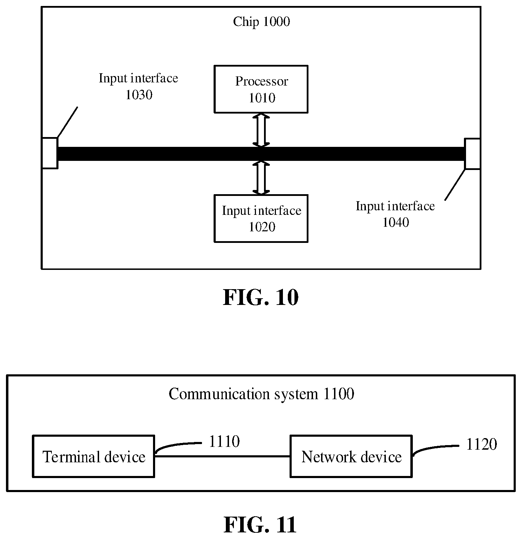

FIG. 10 is a schematic structural diagram of a chip 1000 according to an embodiment of the present disclosure. The chip 1000 includes a processor 1010, which can call and run a computer program from a memory to implement the method in the embodiment of the present disclosure.

In an embodiment, the chip 1000 may further include a memory 1020. The processor 1010 may call and run a computer program from the memory 1020 to implement the method executed by the terminal device or the network device in the embodiment of the present disclosure.

Here, the memory 1020 may be a separate device separate from the processor 1010 or may be integrated in the processor 1010.

In an embodiment, the chip 1000 may further include an input interface 1030. The processor 1010 may control the input interface 1030 to communicate with other devices or chips, specifically, may acquire information or data transmitted by other devices or chips.

In an embodiment, the chip 1000 may further include an output interface 1040. Among them, the processor 1010 may control the output interface 1040 to communicate with other devices or chips, specifically, may output information or data to other devices or chips.

In an embodiment, the chip can be applied to the terminal device in the embodiment of the present disclosure, and the chip can implement the corresponding flow implemented by the terminal device in each method of the embodiment of the present disclosure, and will not be repeated here for the sake of simplicity.

In an embodiment, the chip can be applied to the network device in the embodiment of the present disclosure, and the chip can implement corresponding processes implemented by the network device in each method of the embodiment of the present disclosure, and will not be repeated here for the sake of simplicity.

The chips applied to the terminal device and the network device may be the same chip or different chips.

It is to be understood that the chip mentioned in the embodiments of the present disclosure may also be referred to as a system-on-chip, or a system-on-chip chip.

The processor mentioned above may be a general-purpose processor, a digital signal processor (DSP), a field programmable gate array (FPGA), an application specific integrated circuit (ASIC) or other programmable logic device, a transistor logic device, a discrete hardware component, or the like. Among them, the general-purpose processor mentioned above may be a microprocessor or any conventional processor or the like.

The memory mentioned above may be a volatile memory or a non-volatile memory, or may include both volatile and non-volatile memory. The non-volatile memory may be a read-only memory (ROM), a programmable read-only memory (PROM), an erasable PROM (EPROM), an electrically erasable programmable read-only memory (EEPROM), or a flash memory. The volatile memory may be a random access memory (RAM).

It is to be understood that the above memory is illustrative but not limiting, for example, the memory in embodiments of the present disclosure may also be a static random access memory (SRAM), a dynamic random access memory (DRAM), a synchronous dynamic random access memory (SDRAM), a double data rate synchronous dynamic random access memory (DDR SDRAM), an enhanced SDRAM (ESDRAM), a synch link dynamic random access memory (SLDRAM), a Direct Rambus RAM (DR RAM), and the like. That is, the memory in the embodiments of the present disclosure is intended to include, but is not limited to, these and any other suitable type of memory.

FIG. 11 is a schematic block diagram of a communication system 1100 according to an embodiment of the present disclosure. The communication system 1100 includes a terminal device 1110 and a network device 1120.

The terminal device 1110 includes a first determining unit, a second determining unit and a demodulation unit.

The first determining unit is configured to determine K activated CDM groups, K being a positive integer;

The second determining unit is configured to receive DCI signaling from a network device, and determine a DMRS port for PDSCH in the CDM group according to the DCI signaling;

The demodulation unit is configured to demodulate the PDSCH based on the DMRS ports for the PDSCH in the CDM groups.

The network device 1120 includes a third determining unit and a sending unit.

The third determining unit is configured to determine K activated CDM groups, K being a positive integer;

The sending unit configured to send DCI signaling for determining DMRS ports for PDSCH in the CDM groups.

Here, the terminal device 1110 may be used to implement the corresponding functions implemented by the terminal device in the above-described method, and the network device 1120 may be used to implement the corresponding functions implemented by the network device in the above-described method. For the sake of brevity, I won't go into details here.

In the embodiments described above, it may be implemented in whole or in part by software, hardware, firmware, or any combination thereof. When implemented using software, it may be fully or partially implemented in the form of a computer program product. The computer program product includes one or more computer instructions. When the computer program instructions are loaded and executed on a computer, the flow or functionality according to the embodiments of the present disclosure is generated in whole or in part. The computer may be a general purpose computer, a special purpose computer, a computer network, or other programmable device. The computer instructions may be stored in a computer-readable storage medium or transmitted from one computer-readable storage medium to another computer-readable storage medium, for example, the computer instructions may be transmitted from one website site, computer, server, or data center by wired (e.g., coaxial cable, fiber optic, Digital Subscriber Line (DSL)) or wireless (e.g., infrared, wireless, microwave, etc.) means to another website site, computer, server, or data center. The computer-readable storage medium may be any available medium accessible by a computer or a data storage device such as a server, data center, etc. that incorporates one or more available media integrations. The available medium may be a magnetic medium (e.g., floppy disk, hard disk, magnetic tape), an optical medium (e.g., DVD), or a semiconductor medium (e.g., Solid State Disk (SSD)), etc.

The above is merely a specific embodiment of the present disclosure, but the scope of protection of the present disclosure is not limited thereto. Any person skilled in the art can easily think of changes or substitutions within the technical scope disclosed in the present disclosure, and should be covered within the scope of protection of the present disclosure. Therefore, the scope of protection of this application should be based on the scope of protection of this claim.

## Claims

1. A demodulation method, comprising:
determining, by a terminal device, K activated Code Division Multiplexing (CDM) groups, K being a positive integer;
receiving, by the terminal device, first Downlink Control Information (DCI) signaling from a network device, and determining, according to the first DCI signaling, Demodulation Reference Signal (DMRS) ports for a Physical Downlink Shared Channel (PDSCH) in the CDM groups;
performing, by the terminal device, demodulation of the PDSCH based on the DMRS ports for the PDSCH in the CDM groups.

2. The method according to claim 1, wherein determining, by the terminal device according to the first DCI signaling, the DMRS ports for the PDSCH in the CDM groups comprises:
determining, by the terminal device, based on the first DCI signaling, respective PDSCH transport layer numbers corresponding to different CDM groups among the K CDM groups; and determining the DMRS ports for the PDSCH in the CDM groups according to the respective PDSCH transport layer numbers corresponding to the different CDM groups among the K CDM groups.

3. The method according to claim 2, wherein the first DCI signaling comprises first information, the first information indicates respectively a PDSCH transport layer number corresponding to each CDM group among the K CDM groups;
determining, by the terminal device based on the first DCI signaling, the respective PDSCH transport layer numbers corresponding to the different CDM groups among the K CDM groups comprises: determining, by the terminal device according to the first information, the respective PDSCH transport layer number corresponding to each CDM group among the K CDM groups.

4. The method according to claim 3, wherein a range of a value of the PDSCH transport layer number corresponding to each CDM group is { 1, 2}, or {0, 1, 2}, or {1, 2, 3, 4}, or {0, 1, 2, 3, 4}, or {0, 1, 2, NULL}, or {0, 1, 2, 3, NULL}.

5. The method according to claim 4, wherein
0 indicates that a CDM group is not used for sending DMRS, but the terminal device needs to perform rate matching on resources occupied by the CDM group;
NULL indicates that a CDM group is not used for sending DMRS, and the terminal device does not need to perform rate matching on resources occupied by the CDM group.

6. The method according to claim 2, wherein the first DCI signaling comprises second information and third information, the second information indicates a value of K, and the third information indicates a combination of K transport layer numbers corresponding to the value of K;
determining, by the terminal device based on the first DCI signaling, the PDSCH transport layer number corresponding to the CDM group comprises:
determining, by the terminal device according to the value of K and the combination of K transport layer numbers corresponding to the value of K, the respective PDSCH transport layer number corresponding to each CDM group among the K CDM groups.

7. The method according to claim 2, wherein the first DCI signaling indicates a total transport layer number and a distribution manner of transport layers among the K CDM groups;
determining, by the terminal device based on the first DCI signaling, the PDSCH transport layer number corresponding to the CDM group comprises:
determining, by the terminal device according to the total transport layer number and the distribution manner of the transport layers among the K CDM groups, the respective PDSCH transport layer number corresponding to each CDM group among the K CDM groups.

8. The method according to claim 7, wherein the distribution manner of the transport layers among the K CDM groups comprises: a combination of k transport layer numbers; wherein k is a positive integer less than or equal to K; wherein
the k transport layer numbers correspond respectively to the first k CDM groups among the K CDM groups; or
the k transport layer numbers correspond respectively to k CDM groups indicated by the network device among the K CDM groups.

9. The method according to claim 8, wherein among the k transport layer numbers, a difference between a maximum transport layer number and a minimum transport layer number is less than or equal to 1; or
among the k transport layer numbers, a difference between a maximum transport layer number and a minimum transport layer number is less than or equal to 2.

10. The method according to any one of claims 2 to 9, wherein when the PDSCH transport layer number corresponding to the CDM group is n, and n is a positive integer;
the terminal device determines that n DMRS ports among the first n DMRS ports in the CDM group are adopted for the n PDSCH transport layers of the CDM group; or
the terminal device determines, according to an indication of higher layer signaling or physical layer signaling, n DMRS ports in the CDM group used for the n PDSCH transport layers.

11. The method according to any one of claims 1 to 10, wherein determining, by the terminal device, the K activated CDM groups comprises:
determining, by the terminal device, the K activated CDM groups from L CDM groups agreed with the network device, wherein L is an integer greater than or equal to 3.

12. The method according to any one of claims 1 to 10, wherein determining, by the terminal device, the K activated CDM groups comprises at least one of:
receiving, by the terminal device, higher layer signaling from the network device, and determining the activated CDM groups according to the higher layer signaling;
receiving, by the terminal device, second DCI signaling from the network device, and determining the activated CDM groups according to the second DCI signaling;
determining, by the terminal device, a number of activated CDM groups according to a maximum transport layer number configured by the network device, and determining the activated CDM groups according to the number of activated CDM groups;
determining, by the terminal device, a number of activated CDM groups according to a number of Transmission Configuration Indication (TCI) states indicated in third DCI signaling, and determining the activated CDM groups according to the number of activated CDM groups.

13. The method according to claim 12, wherein receiving, by the terminal device, higher layer signaling from the network device and determining the activated CDM groups according to the higher layer signaling comprises at least one of:
receiving, by the terminal device, a bitmap indicated by the higher layer signaling, each bit in the bitmap corresponds to one CDM group, and determining, by the terminal device according to each bit, whether a corresponding CDM group is an activated CDM group;
receiving, by the terminal device, K indicated by the higher layer signaling, and determining corresponding K activated CDM groups;
receiving, by the terminal device, a DMRS symbol number indicated by the higher layer signaling, and determining that CDM groups on DMRS symbols corresponding to the DMRS symbol number are activated CDM groups;
receiving, by the terminal device, Radio Resource Control (RRC) signaling and a Media Access Control Control Element (MAC CE) from the network device, determining a DMRS symbol number according to the RRC signaling, and determining activated CDM groups on DMRS symbols corresponding to the DMRS symbol number according to the MAC CE.

14. The method according to claim 12, wherein receiving, by the terminal device, second DCI signaling from the network device and determining the activated CDM groups according to the second DCI signaling comprises at least one of:
receiving, by the terminal device, a bitmap indicated by the second DCI signaling, each bit in the bitmap corresponds to one CDM group, and determining, by the terminal device according to each bit, whether a corresponding CDM group is an activated CDM group;
receiving, by the terminal device, K indicated by the second DCI signaling, and determining corresponding K activated CDM groups;
receiving, by the terminal device, a DMRS symbol number indicated by the second DCI signaling, and determining that CDM groups on DMRS symbols corresponding to the DMRS symbol number are activated CDM groups;
receiving, by the terminal device, Radio Resource Control (RRC) signaling and the second DCI signaling from the network device, determining a DMRS symbol number according to the RRC signaling, and determining activated CDM groups on DMRS symbols corresponding to the DMRS symbol number according to the second DCI signaling.

15. The method according to any one of claims 1 to 14, wherein the number K of activated CDM groups is less than or equal to a maximum transport layer number configured by the network device.

16. The method according to any one of claims 1 to 15, wherein the first DCI signaling indicates respectively DMRS ports for the PDSCH within each CDM group among the K CDM groups;
determining, according to the first DCI signaling, the DMRS ports for the PDSCH in the CDM groups comprises: determining, according to the first DCI signaling, the DMRS ports for the PDSCH within each CDM group among the K CDM groups.

17. The method according to claim 16, wherein a range of value of the DMRS ports for the PDSCH within each CDM group is {0, 1, 0-1}, or {0, 1, 0-1, Null}, or {0, 1, 2, 3, 0-1, 2-3, 0-2, 0-3}, or {0, 1, 2, 3, 0-1, 2-3, 0-2, 0-3, Null}.

18. The method according to claim 17, wherein
NULL indicates that a CDM group is not used for sending the DMRS of the terminal device.

19. The method according to any one of claims 1 to 18, further comprising, receiving, by the terminal device, fourth DCI signaling; and determining, according to the fourth DCI signaling, a Transmission Configuration Indication (TCI) state corresponding to the CDM group.

20. The method according to claim 19, wherein
the fourth DCI signaling indicates M TCI states, the M TCI states have a one-to-one correspondence with M CDM groups for PDSCH transmission among the K CDM groups, and M is a positive integer; or
the fourth DCI signaling indicates N TCI states, and the terminal device determines, according to correspondences between TCI states and CDM groups pre-indicated by the network device through higher layer signaling, a TCI state corresponding to each CDM group for PDSCH transmission among the K CDM groups from the N TCI states; and N is a positive integer; or
the fourth DCI signaling indicates a first TCI state, a second TCI state, and a bitmap, the bitmap is used to indicate that the K TCI states adopt the first TCI state or the second TCI state respectively.

21. The method according to claim 19 or 20, wherein CDM groups corresponding to a same TCI state are associated with a same Phase Tracking Reference Signal (PTRS) port.

22. The method according to any one of claims 1 to 21, wherein K is greater than 3.

23. A signal sending method, comprising:
determining, by a network device, K activated the network device groups, K being a positive integer;
sending, by the network device, first Downlink Control Information (DCI) signaling, the first DCI signaling being used to determine Demodulation Reference Signal (DMRS) ports for a Physical Downlink Shared Channel (PDSCH) in the CDM groups.

24. The method according to claim 23, further comprising, sending, by the network device, the PDSCH and DMRS on corresponding DMRS ports, wherein the DMRS ports are from the K CDM groups.

25. The method according to claim 23 or 24, wherein the first DCI signaling is used for a terminal device to determine respective PDSCH transport layer numbers corresponding to different CDM groups among the K CDM groups, and to determine, according to the respective PDSCH transport layer numbers corresponding to the different CDM groups among the K CDM groups, the DMRS ports for the PDSCH in the CDM groups.

26. The method according to claim 25, wherein the first DCI signaling comprises first information, the first information indicates respectively a PDSCH transport layer number corresponding to each CDM group among the K CDM groups.

27. The method according to claim 26, wherein a range of value of the PDSCH transport layer number corresponding to each CDM group is {1, 2}, or {0, 1, 2}, or 11, 2, 3, 4}, or {0, 1, 2, 3, 4}, or {0, 1, 2, NULL}, or {0, 1, 2, 3, NULL}.

28. The method according to claim 27, wherein
0 indicates that a CDM group is not used for sending DMRS, but the terminal device needs to perform rate matching on resources occupied by the CDM group;
NULL indicates that a CDM group is not used for sending DMRS, and the terminal device does not need to perform rate matching on resources occupied by the CDM group.

29. The method according to claim 25, wherein the first DCI signaling comprises second information and third information, the second information indicates a value of K, and the third information indicates a combination of K transport layer numbers corresponding to the value of K.

30. The method according to claim 25, wherein the first DCI signaling indicates a total transport layer number and a distribution manner of transport layers among the K CDM groups.

31. The method according to claim 30, wherein the distribution manner of the transport layers among the K CDM groups comprises: a combination of k transport layer numbers; wherein k is a positive integer less than or equal to K; wherein
the k transport layer numbers correspond respectively to the first k CDM groups among the K CDM groups; or
the k transport layer numbers correspond respectively to k CDM groups indicated by the network device among the K CDM groups.

32. The method according to claim 31, wherein among the k transport layer numbers, a difference between a maximum transport layer number and a minimum transport layer number is less than or equal to 1; or
among the k transport layer numbers, a difference between a maximum transport layer number and a minimum transport layer number is less than or equal to 2.

33. The method according to any one of claims 23 to 32, further comprising at least one of:
sending, by the network device, higher layer signaling to a terminal device, the higher layer signaling being used to determine activated CDM groups;
sending, by the network device, second DCI signaling to a terminal device, the second DCI signaling being used to determine activated CDM groups; or
sending, by the network device, third DCI signaling to a terminal device, the third DCI signaling being used to indicate a number of Transmission Configuration Indication (TCI) states.

34. The method according to claim 33, wherein sending, by the network device, higher layer signaling to a terminal device, the higher layer signaling being used to determine activated CDM groups, comprises at least one of:
sending, by the network device, a bitmap indicated by the higher layer signaling, wherein each bit in the bitmap corresponds to one CDM group, and each bit is used to determine whether a corresponding CDM group is an activated CDM group;
sending, by the network device, K indicated by the higher layer signaling, wherein K is used to determine corresponding K activated CDM groups;
sending, by the network device, a DMRS symbol number indicated by the higher layer signaling, wherein the DMRS symbol number is used to determine that CDM groups on corresponding DMRS symbols are activated CDM groups;
sending, by the network device, Radio Resource Control (RRC) signaling and a Media Access Control Control Element (MAC CE), wherein the RRC signaling is used to determine a DMRS symbol number, and the MAC CE being used to determine activated CDM groups on DMRS symbols corresponding to the DMRS symbol number.

35. The method according to claim 32, wherein sending, by the network device, second DCI signaling to a terminal device, the second DCI signaling being used to determine activated CDM groups, comprises at least one of:
sending, by the network device, a bitmap indicated by the second DCI signaling, wherein each bit in the bitmap corresponds to one CDM group, and each bit is used to determine whether a corresponding CDM group is an activated CDM group;
sending, by the network device, K indicated by the second DCI signaling, K being used to determine corresponding K activated CDM groups;
sending, by the network device, a DMRS symbol number indicated by the second DCI signaling, the DMRS symbol number being used to determine that CDM groups on corresponding DMRS symbols are activated CDM groups.

36. The method according to any one of claims 1 to 35, wherein the number K of activated CDM groups is less than or equal to a maximum transport layer number configured by the network device.

37. The method according to any one of claims 23 to 36, wherein the first DCI signaling indicates respectively DMRS ports for the PDSCH within each CDM group among the K CDM groups.

38. The method according to claim 37, wherein a range of value of the DMRS ports for the PDSCH within each CDM group is {0, 1, 0-1}, or {0, 1, 0-1, Null}, or {0, 1, 2, 3, 0-1, 2-3, 0-2, 0-3}, or {0, 1, 2, 3, 0-1, 2-3, 0-2, 0-3, Null}.

39. The method according to claim 38, wherein
NULL indicates that a CDM group is not used for sending the DMRS of the terminal device.

40. The method according to any one of claims 23 to 39, further comprising, sending, by the network device, fourth DCI signaling, the fourth DCI signaling being used to determine a TCI state corresponding to the CDM group.

41. The method according to any one of claims 23 to 40, wherein the fourth DCI signaling being used to determine the TCI state corresponding to the CDM group comprises:
the fourth DCI signaling indicating M TCI states, wherein the M TCI states have a one-to-one correspondence with M CDM groups used for PDSCH transmission among the K CDM groups, and M is a positive integer; or
the fourth DCI signaling indicating N TCI states, wherein the N TCI states are used for a terminal device to determine, according to correspondences between TCI states and CDM groups pre-indicated by the network device through higher layer signaling, a TCI state corresponding to each CDM group for PDSCH transmission among the K CDM groups from the N TCI states; and N is a positive integer; or
the fourth DCI signaling indicating a first TCI state, a second TCI state, and a bitmap, wherein the bitmap is used to indicate that the K TCI states adopt the first TCI state or the second TCI state respectively.

42. The method according to claim 40 or 41, wherein CDM groups corresponding to a same TCI state are associated with a same PTRS port.

43. The method according to any one of claims 23 to 42, wherein K is greater than 3.

44. A terminal device, comprising:
a first determining unit, configured to determine K activated Code Division Multiplexing (CDM) groups, wherein K is a positive integer;
a second determining unit, configured to receive first Downlink Control Information (DCI) signaling from a network device, and determine, according to the first DCI signaling, Demodulation Reference Signal (DMRS) ports for a Physical Downlink Shared Channel (PDSCH) in the CDM groups;
a demodulation unit, configured to perform demodulation of the PDSCH based on the DMRS ports for the PDSCH in the CDM groups.

45. A network device, comprising:
a third determining unit, configured to determine K activated Physical Downlink Shared Channel (PDSCH) groups, wherein K is a positive integer;
a sending unit, configured to send first Downlink Control Information (DCI) signaling, the first DCI signaling being used to determine Demodulation Reference Signal (DMRS) ports for a Physical Downlink Shared Channel (PDSCH) in the CDM groups.

46. A communication device, comprising: a processor, a memory, and a transceiver, wherein the memory is configured to store a computer program, the processor is configured to invoke and run the computer program stored in the memory, and control the transceiver, to cause the communication device to perform the method according to any one of claims 1 to 22 or the method according to any one of claims 23 to 43.

47. A chip, comprising: a processor, configured to invoke and run a computer program from a memory, so that a device on which the chip is installed performs the method according to any one of claims 1 to 22 or the method according to any one of claims 23 to 43.

48. A computer-readable storage medium, configured to store a computer program, wherein the computer program, when run by a device, causes the device to perform the method according to any one of claims 1 to 22 or the method according to any one of claims 23 to 43.

49. A computer program product, comprising computer program instructions, that cause a computer to perform the method according to any one of claims 1 to 22 or the method according to any one of claims 23 to 43.

50. A computer program, which causes a computer to perform the method according to any one of claims 1 to 22 or the method according to any one of claims 23 to 43.
